# EUROPEAN PATENT APPLICATION

(11) **EP 4 836 386 A1**
(43) Date of publication of application: **04.11.2026**
(21) Application number: 24918123.1
(22) Date of filing: 10.10.2024
(51) Int. Cl.: H04L 67/141

(54) **COMMUNICATION METHOD AND APPARATUS BASED ON REMOTE DIRECT MEMORY ACCESS**

(30) Priority: 19.01.2024 CN 202410083131
(71) Applicant: Huawei Technologies Co., Ltd., Shenzhen, Guangdong 518129 (CN)
(72) Inventor: LIU, Zhe, Shenzhen, Guangdong 518129 (CN); PENG, Chenghui, Shenzhen, Guangdong 518129 (CN); WANG, Fei, Shenzhen, Guangdong 518129 (CN)
(74) Representative: Pfenning, Meinig & Partner mbB
(86) International application number: PCT/CN2024/123858
(87) International publication number: WO 2025/152514

(57) **Abstract**

A remote direct memory access-based communication method and apparatus are provided, so that a management packet of remote direct memory access RDMA can be transmitted to an RDMA node in a timely manner, thereby improving remote memory read performance. The method includes: A terminal sends a first message and receives a second message. The first message is used for requesting to establish a protocol data unit PDU session, and the PDU session is used for transmitting an RDMA packet. The second message indicates that establishment of the PDU session is accepted. The first message includes first information, the first information indicates a type of the RDMA packet transmitted in the PDU session, the type of the RDMA packet includes a first-type packet and a second-type packet, and a transmission priority of the first-type packet is higher than a transmission priority of the second-type packet. The first-type packet is a management packet, and the second-type packet is a data packet; or the first-type packet is a first-type management packet, the second-type packet includes a second-type management packet and/or a data packet, and the first-type management packet is used for subnet management.

## Description

This application claims priority to Chinese Patent Application No. 202410083131.4, filed with the China National Intellectual Property Administration on January 19, 2024 and entitled "REMOTE DIRECT MEMORY ACCESS-BASED COMMUNICATION METHOD AND APPARATUS", which is incorporated herein by reference in its entirety.

### TECHNICAL FIELD

Embodiments of this application relate to the communication field, and in particular, to a remote direct memory access-based communication method and an apparatus.

### BACKGROUND

Remote direct memory access (remote direct memory access, RDMA) technology is used to address data processing latency on a server side during network transmission. Based on the RDMA technology, memory data can be directly accessed through a network interface, thereby eliminating the need for a central processing unit (central processing unit, CPU) to migrate data to a kernel and then from the kernel to a network interface card. RDMA allows for high-throughput and low-latency network communication, and is particularly suitable for use in large-scale parallel computer clusters.

RDMA packets include management packets (management datagrams, MAD) and data packets. The MADs are further classified into subnet management (subnet management, SM) MADs, communication management (communication management, CM) MADs, performance (performance) MADs, or the like. Among these MADs, the SM MADs have a higher priority than data packets and other types of MADs.

In current integration technologies of wireless and RDMA, CM MADs are transmitted over the air interface via radio resource control (radio resource control, RRC) signaling on a control plane, and other management packets and data packets are transmitted over the air interface on a user plane. However, because all RDMA packets except CM MADs are transmitted over the air interface on the user plane, RDMA control information may not be transmitted to RDMA nodes in a timely manner, leading to degradation of remote memory read performance.

### SUMMARY

This application provides a remote direct memory access-based communication method and an apparatus, so that a management packet of RDMA can be transmitted to an RDMA node in a timely manner, thereby improving remote memory read performance.

According to a first aspect, a remote direct memory access-based method is provided. The method may be performed by a terminal, may be performed by a module (for example, a processor, a chip, or a chip system) used in the terminal, or may be implemented by a logical node, a logical module, or software that can implement all or some functions of the terminal. The method includes: sending a first message, where the first message is used for requesting to establish a protocol data unit PDU session, and the PDU session is used for transmitting a remote direct memory access RDMA packet; and receiving a second message, where the second message indicates that establishment of the PDU session is accepted. The first message includes first information, the first information indicates a type of the RDMA packet transmitted in the PDU session, the type of the RDMA packet includes a first-type packet and a second-type packet, and a transmission priority of the first-type packet is higher than a transmission priority of the second-type packet. The first-type packet is a management packet, and the second-type packet is a data packet; or the first-type packet is a first-type management packet, the second-type packet includes a second-type management packet and/or a data packet, and the first-type management packet is used for subnet management.

Based on this solution, both the management packet of RDMA and the data packet of RDMA are transmitted on a user plane by using the PDU session. Because the transmission priority of the management packet (for example, an SM management packet or a CM management packet) is higher than the transmission priority of the data packet, or the transmission priority of the first-type management packet is higher than a transmission priority of another packet (for example, the CM management packet or the data packet), so that the management packet or the first-type management packet can be preferentially transmitted, to ensure that RDMA control information can be transmitted to an RDMA node in a timely manner, thereby improving remote memory read performance.

According to a second aspect, a remote direct memory access-based method is provided. The method may be performed by a RAN node, may be performed by a module (for example, a processor, a chip, or a chip system) used in the RAN node, or may be implemented by a logical node, a logical module, or software that can implement all or some functions of the RAN node. The method includes: receiving a first message, where the first message is used for requesting to establish a protocol data unit PDU session, and the PDU session is used for transmitting a remote direct memory access RDMA packet; and sending a second message, where the second message indicates that establishment of the PDU session is accepted. The first message includes first information, the first information indicates a type of the RDMA packet transmitted in the PDU session, the type of the RDMA packet includes a first-type packet and a second-type packet, and a transmission priority of the first-type packet is higher than a transmission priority of the second-type packet. The first-type packet is a management packet, and the second-type packet is a data packet; or the first-type packet is a first-type management packet, the second-type packet includes a second-type management packet and/or a data packet, and the first-type management packet is used for subnet management. For technical effects brought by the second aspect, refer to the technical effects brought by the first aspect. Details are not described herein again.

With reference to the first aspect or the second aspect, in a possible design, the first-type packet is transmitted by using a first-type quality of service QoS flow of the PDU session. The second-type packet is transmitted by using a second-type QoS flow of the PDU session. A priority of the first-type QoS flow is higher than a priority of the second-type QoS flow.

Based on this possible design, because the priority of the first-type QoS flow for transmitting the first-type packet is higher than the priority of the second-type QoS flow for transmitting the second-type packet, the first-type packet, that is, the management packet or the first-type management packet, can be transmitted to an RDMA node in a timely manner, thereby improving remote memory read performance.

With reference to the first aspect or the second aspect, in a possible design, the first message further includes second information, and the second information indicates that a type of the PDU session is an RDMA session.

Based on this possible design, the second information can indicate that the PDU session that is requested to be established is the RDMA session, so that a session management network element can set a higher priority for the first-type packet, only to ensure that the first-type packet can be transmitted to the RDMA node in a timely manner.

With reference to the first aspect or the second aspect, in a possible design, the first information includes a transport layer identifier of the RDMA packet. When the transport layer identifier is less than or equal to a first value, the type of the RDMA packet transmitted in the PDU session is the management packet; or when the transport layer identifier is greater than a first value, the type of the RDMA packet transmitted in the PDU session is the data packet. Based on this possible design, the management packet or the data packet can be distinguished by using the transport layer identifier.

With reference to the first aspect or the second aspect, in a possible design, the first information includes a link layer identifier of the RDMA packet. When the link layer identifier is greater than or equal to a second value, the type of the RDMA packet transmitted in the PDU session is the first-type management packet; or when the link layer identifier is less than a second value, the type of the RDMA packet transmitted in the PDU session is the second-type management packet and/or the data packet. Based on this possible design, the first-type management packet or another packet, for example, the second-type management packet and/or the data packet, can be distinguished by using the link layer identifier.

With reference to the first aspect or the second aspect, in a possible design, the first-type management packet includes at least one of the following: information used for obtaining or reading a node attribute, information used for setting or writing a node attribute, or response information of a read/write request.

With reference to the first aspect or the second aspect, in a possible design, the node attribute indicates at least one of the following: node description information, node information, or subnet management information. The node information includes at least one of the following: a management packet version, a subnet management version, or a node type. The subnet management information includes at least one of the following: a global unique identifier, a subnet management key, a subnet management status, or a priority.

With reference to the first aspect or the second aspect, the second message is referred to as a fifth message in the following specific implementations.

According to a third aspect, a remote direct memory access-based communication method is provided. The method may be performed by a first communication apparatus, may be performed by a module (for example, a processor, a chip, or a chip system) used in the first communication apparatus, or may be implemented by a logical node, a logical module, or software that can implement all or some functions of the first communication apparatus. The first communication apparatus may be a terminal or a RAN node. The method includes: determining a first radio bearer used for carrying a first packet, and sending the first packet on the first radio bearer. The first packet is obtained based on a remote direct memory access RDMA packet. When the RDMA packet is a first-type packet, the first radio bearer is a signaling radio bearer SRB; or when the RDMA packet is a second-type packet, the first radio bearer is a computing radio bearer CRB or a data radio bearer DRB. The first-type packet is a management packet, and the second-type packet is a data packet; or the first-type packet is a first-type management packet, the second-type packet includes a second-type management packet and/or a data packet, and the first-type management packet is used for subnet management.

Based on this solution, the management packet or the first-type management packet is transmitted on a high-priority control plane (for example, the SRB), and a data packet of RDMA is transmitted on a user plane (for example, the DRB or the SRB), so that a management control message of RDMA can be preferentially transmitted, to ensure that RDMA control information can be transmitted to an RDMA node in a timely manner, thereby improving remote memory read performance.

In a possible design, the method further includes: generating the RDMA packet based on an RDMA protocol stack; and determining the first packet based on a wireless communication protocol stack and the RDMA packet.

Based on this possible design, convergence of the RDMA protocol stack and the wireless communication protocol stack can be implemented, and a packet is generated based on the RDMA protocol stack and the wireless communication protocol stack, so that RDMA is applied to wireless communication, and CPU utilization of a node in a wireless communication system is reduced.

In a possible design, the RDMA protocol stack includes a transport layer, a network layer, and a link layer. The generating the RDMA packet based on the RDMA protocol stack includes: generating a transport layer packet based on the transport layer in the RDMA protocol stack; generating a network layer packet based on the network layer in the RDMA protocol stack and the transport layer packet; and generating a link layer packet as the RDMA packet based on the link layer in the RDMA protocol stack and the network layer packet.

In a possible design, when a link layer identifier of the RDMA packet is greater than or equal to a second value, the RDMA packet is the first-type management packet; or when the link layer identifier of the RDMA packet is less than a second value, the RDMA packet is the second-type management packet and/or the data packet. Based on this possible design, the first-type management packet and another packet can be identified by using the link layer identifier.

In a possible design, the RDMA protocol stack includes a transport layer. The generating the RDMA packet based on the RDMA protocol stack includes: generating a transport layer packet based on the transport layer in the RDMA protocol stack; and determining the RDMA packet based on the transport layer packet.

In a possible design, the determining the RDMA packet based on the transport layer packet includes: using the transport layer packet as the RDMA packet; or generating a network layer packet as the RDMA packet based on a network layer in the RDMA protocol stack and the transport layer packet.

In a possible design, when a transport layer identifier of the RDMA packet is less than or equal to a first value, the RDMA packet is the management packet; or when a transport layer identifier of the RDMA packet is greater than a first value, the RDMA packet is the data packet. Based on this possible design, the management packet or the data packet can be identified based on the transport layer identifier.

In a possible design, when the RDMA packet is the first-type packet, the first packet is carried in a radio resource control RRC container or a non-access stratum NAS container.

In a possible design, when the first packet is the first-type packet, the generating the first packet based on the wireless communication protocol stack and the RDMA packet includes: generating the first packet based on an RRC layer or a NAS stratum in the wireless communication protocol stack and the RDMA packet.

In a possible design, the generating the first packet based on the wireless communication protocol stack and the RDMA packet includes: generating the first packet based on an SDAP layer or a PDCP layer in the wireless communication protocol stack and the RDMA packet.

In a possible design, the method further includes: sending a first message, where the first message is used for requesting to set up an RRC connection, and the first message includes a cause value for requesting to set up the RRC connection. When the RDMA packet is the first-type packet, the cause value is a first cause value, and the first cause value is used for triggering control plane transmission; or when the RDMA packet is the second-type packet, the cause value is a second cause value, and the second cause value is used for triggering user plane transmission. The first message is referred to as a seventh message in the following specific implementations.

Based on this possible design, when the RDMA packet is the first-type packet, an RRC connection setup request carries the first cause value used for triggering control plane transmission; or when the RDMA packet is the second-type packet, the RRC connection setup request carries the second cause value used for triggering user plane transmission. In this way, when the RDMA packet is the first-type packet, control plane transmission can be performed, and the first-type packet is carried via the SRB. In addition, when the RDMA packet is the second-type packet, user plane transmission can be performed, and a second packet is carried via the CRB or the SRB. Finally, the management control message of RDMA can be preferentially transmitted, to ensure that the RDMA control information can be transmitted to the RDMA node in a timely manner, thereby improving the remote memory read performance.

In a possible design, the first cause value is at least one of a mobile terminated response, mobile originated signaling access, or RDMA signaling access, and/or the second cause value is data access or RDMA data access.

According to a fourth aspect, a remote direct memory access-based communication method is provided. The method may be performed by a RAN node, may be performed by a module (for example, a processor, a chip, or a chip system) used in the RAN node, or may be implemented by a logical node, a logical module, or software that can implement all or some functions of the RAN node. The method includes: receiving a first packet through a general packet radio service tunnelling protocol for user plane GTP-U tunnel, where the first packet is obtained based on a remote direct memory access RDMA packet; and sending the first packet on a first radio bearer. When the RDMA packet is a first-type management packet, the first radio bearer is a signaling radio bearer SRB, and the first-type management packet is used for communication management; or when the RDMA packet is a data packet, the first radio bearer is a computing radio bearer CRB or a data radio bearer DRB.

Based on this solution, a management packet used for communication management is transmitted on a high-priority control plane (for example, the SRB), and a data packet of RDMA is transmitted on a user plane (for example, the DRB or the SRB), so that the management packet of RDMA can be preferentially transmitted, to ensure that RDMA control information can be transmitted to an RDMA node in a timely manner, thereby improving remote memory read performance. In addition, the management packet is carried via the SRB, and reliability of the SRB is higher than that of the CRB or the DRB. Therefore, a link establishment failure can be avoided as much as possible, thereby avoiding RDMA performance degradation caused by repeated link establishment, and improving RDMA performance.

The first packet is referred to as a second packet in the following specific implementations, the first radio bearer is referred to as a second radio bearer in the following specific implementations, and the first-type management packet is referred to as a second-type management packet in the following specific implementations.

In a possible design, when the GTP-U tunnel is a first GTP-U tunnel, the RDMA packet is the first-type management packet; or when the GTP-U tunnel is a second GTP-U tunnel, the RDMA packet is the data packet.

Based on this possible design, GTP-U tunnels used for transmitting the first-type management packet and the data packet may be separately established between the RAN node and a core network element, so that different GTP-U tunnels can be used for transmitting the first-type management packet and the data packet.

In a possible design, when a transport layer identifier of the RDMA packet is less than or equal to a first value, the RDMA packet is the first-type management packet; or when a transport layer identifier of the RDMA packet is greater than a first value, the RDMA packet is the data packet.

Based on this possible design, the first-type management packet or the data packet can be identified by using the transport layer identifier, and does not need to be distinguished through the GTP-U tunnel, so that a GTP-U tunnel between the RAN node and the core network element can be reused for the first-type management packet and the data packet, thereby reducing complexity and overheads of establishing a tunnel between the RAN node and the core network element.

According to a fifth aspect, a remote direct memory access-based communication method is provided. The method may be performed by a core network element, may be performed by a module (for example, a processor, a chip, or a chip system) used in the core network element, or may be implemented by a logical node, a logical module, or software that can implement all or some functions of the core network element. The core network element may be a user plane network element or have a user plane function. The method includes: determining a first packet, where the first packet is obtained based on a remote direct memory access RDMA packet; and sending the first packet through a general packet radio service tunnelling protocol for user plane GTP-U tunnel. When the RDMA packet is a first-type management packet, the GTP-U tunnel is a first GTP-U tunnel, and the first-type management packet is used for communication management; or when the RDMA packet is a data packet, the GTP-U tunnel is a second GTP-U tunnel. For technical effects brought by the fifth aspect, refer to the technical effects brought by the fourth aspect. Details are not described herein again.

The first packet is referred to as a second packet in the following specific implementations, and the first-type management packet is referred to as a second-type management packet in the following specific implementations.

According to a sixth aspect, a remote direct memory access-based communication method is provided. The method may be performed by a RAN node, may be performed by a module (for example, a processor, a chip, or a chip system) used in the RAN node, or may be implemented by a logical node, a logical module, or software that can implement all or some functions of the RAN node. The method includes: receiving a first packet on a first radio bearer, where the first packet is obtained based on a remote direct memory access RDMA packet; and sending the first packet through a general packet radio service tunnelling protocol for user plane GTP-U tunnel. When the RDMA packet is a first-type management packet, the first radio bearer is a signaling radio bearer SRB, and the first-type management packet is used for communication management; or when the RDMA packet is a data packet, the first radio bearer is a computing radio bearer CRB or a data radio bearer DRB.

Based on this solution, a management packet used for communication management is transmitted on a high-priority control plane (for example, the SRB), and a data packet of RDMA is transmitted on a user plane (for example, the DRB or the SRB), so that the management packet of RDMA can be preferentially transmitted, to ensure that RDMA control information can be transmitted to an RDMA node in a timely manner, thereby improving remote memory read performance.

The first packet is referred to as a third packet in the following specific implementations, the first radio bearer is referred to as a third radio bearer in the following specific implementations, and the first-type management packet is referred to as a second-type management packet in the following specific implementations.

In a possible design, when the RDMA packet is the first-type management packet, the GTP-U tunnel is a first GTP-U tunnel; or when the RDMA packet is the data packet, the GTP-U tunnel is a second GTP-U tunnel.

Based on this possible design, GTP-U tunnels used for transmitting the first-type management packet and the data packet may be separately established between the RAN node and a core network element, so that different GTP-U tunnels can be used for transmitting the first-type management packet and the data packet.

In a possible design, when a transport layer identifier of the RDMA packet is less than or equal to a first value, the RDMA packet is the first-type management packet; or when a transport layer identifier of the RDMA packet is greater than a first value, the RDMA packet is the data packet.

According to a seventh aspect, a remote direct memory access-based communication method is provided. The method may be performed by a core network element, may be performed by a module (for example, a processor, a chip, or a chip system) used in the core network element, or may be implemented by a logical node, a logical module, or software that can implement all or some functions of the core network element. The core network element may be a user plane network element or have a user plane function. The method includes: receiving a first packet through a general packet radio service tunnelling protocol for user plane GTP-U tunnel, where the first packet is obtained based on a remote direct memory access RDMA packet. When the RDMA packet is a first-type management packet, the GTP-U tunnel is a first GTP-U tunnel, and the first-type management packet is used for communication management; or when the RDMA packet is a data packet, the GTP-U tunnel is a second GTP-U tunnel. For technical effects brought by the seventh aspect, refer to the technical effects brought by the sixth aspect. Details are not described herein again.

The first packet is referred to as a third packet in the following specific implementations, and the first-type management packet is referred to as a second-type management packet in the following specific implementations.

With reference to the fourth aspect to the seventh aspect, in a possible design, a type of the first GTP-U tunnel is a first type, and a GTP-U tunnel of the first type is used for transmitting a first-type management packet of RDMA; or a type of the second GTP-U tunnel is a second type, and a GTP-U tunnel of the second type is used for transmitting a data packet of RDMA.

With reference to the fourth aspect to the seventh aspect, in a possible design, an identifier of the first GTP-U tunnel corresponds to the first-type management packet, and the first GTP-U tunnel is used for transmitting a first-type management packet of RDMA; or an identifier of the second GTP-U tunnel corresponds to the data packet, and the second GTP-U tunnel is used for transmitting a data packet of RDMA.

According to an eighth aspect, a communication apparatus is provided, to implement various methods. The communication apparatus includes corresponding modules, units, or means (means) for implementing the methods. The modules, units, or means may be implemented by hardware, software, or hardware executing corresponding software. The hardware or the software includes one or more modules or units corresponding to functions.

In some possible designs, the communication apparatus may include a processing module and a transceiver module. The processing module may be configured to implement a processing function in any one of the foregoing aspects and the possible implementations of the foregoing aspects. The transceiver module may include a receiving module and a sending module that are respectively configured to implement a receiving function and a sending function in any one of the foregoing aspects and the possible implementations of the foregoing aspects.

In some possible designs, the transceiver module may include a transceiver circuit, a transceiver machine, a transceiver, or a communication interface.

According to a ninth aspect, a communication apparatus is provided, and includes a processor and a memory. The memory is configured to store computer instructions, and when the processor executes the instructions, the communication apparatus is caused to perform the method according to any one of the aspects.

According to a tenth aspect, a communication apparatus is provided, and includes a processor and a communication interface. The communication interface is configured to communicate with a module outside the communication apparatus. The processor is configured to execute a computer program or instructions, to cause the communication apparatus to perform the method according to any one of the aspects.

According to an eleventh aspect, a communication apparatus is provided, and includes at least one processor. The processor is configured to execute a computer program or instructions stored in a memory, to cause the communication apparatus to perform the method according to any one of the aspects. The memory may be coupled to the processor, or may be independent of the processor.

According to a twelfth aspect, a communication apparatus is provided (for example, the communication apparatus may be a chip or a chip system). The communication apparatus includes a processor, configured to implement functions according to any one of the first aspect to the sixth aspect.

In some possible designs, the communication apparatus includes the memory, and the memory is configured to store necessary program instructions and data.

In some possible designs, when the apparatus is the chip system, the apparatus may include a chip, or may include a chip and another discrete component.

It may be understood that the communication apparatus provided in the eighth aspect to the twelfth aspect may be the terminal in the first aspect, may be a module or unit (for example, a chip, a chip system, or a circuit) in the terminal that one-to-one corresponds to the method/operation/step/action described in the first aspect, may be a module or unit that can be used in a matching manner with the terminal, or may be a logical node, a logical module, or software that can implement all or some functions of the terminal.

Alternatively, the communication apparatus may be the RAN node in the second aspect, the fourth aspect, or the sixth aspect, may be a module or unit (for example, a chip, a chip system, or a circuit) in the RAN node that one-to-one corresponds to the method/operation/step/action described in the second aspect, the fourth aspect, or the sixth aspect, may be a module or unit that can be used in a matching manner with the RAN node, or may be a logical node, a logical module, or software that can implement all or some functions of the RAN node.

Alternatively, the communication apparatus may be the first communication apparatus in the third aspect, may be a module or unit (for example, a chip, a chip system, or a circuit) in the first communication apparatus that one-to-one corresponds to the method/operation/step/action described in the third aspect, may be a module or unit that can be used in a matching manner with the first communication apparatus, or may be a logical node, a logical module, or software that can implement all or some functions of the first communication apparatus.

Alternatively, the communication apparatus may be the core network element in the fifth aspect or the seventh aspect, may be a module or unit (for example, a chip, a chip system, or a circuit) in the core network element that one-to-one corresponds to the method/operation/step/action described in the fifth aspect or the seventh aspect, may be a module or unit that can be used in a matching manner with the core network element, or may be a logical node, a logical module, or software that can implement all or some functions of the core network element.

It may be understood that, when the communication apparatus provided in any one of the eighth aspect to the twelfth aspect is a chip, a sending action/function of the communication apparatus may be understood as information output, and a receiving action/function of the communication apparatus may be understood as information input.

According to a thirteenth aspect, a computer-readable storage medium is provided. The computer-readable storage medium stores a computer program or instructions. When the computer program or the instructions are run on a communication apparatus, the communication apparatus is caused to perform the method according to any one of the first aspect to the sixth aspect.

According to a fourteenth aspect, a computer program product including instructions is provided. When the computer program product is run on a communication apparatus, the communication apparatus is caused to perform the method according to any one of the first aspect to the sixth aspect.

According to a fifteenth aspect, a communication system is provided. The communication system includes a terminal and a RAN node. The terminal is configured to perform the method according to any one of the first aspect and the possible designs of the first aspect, and the RAN node is configured to perform the method according to any one of the second aspect and the possible designs of the second aspect.

According to a sixteenth aspect, a communication system is provided. The communication system includes a RAN node and a core network element. The RAN node is configured to perform the method according to any one of the fourth aspect or the sixth aspect and the possible designs of the fourth aspect or the sixth aspect, and the core network element is configured to perform the method according to any one of the fifth aspect or the seventh aspect and the possible designs of the fifth aspect or the seventh aspect.

For technical effects brought by any one of the designs in the eighth aspect to the sixteenth aspect, refer to technical effects brought by different designs in the first aspect to the seventh aspect. Details are not described herein again.

### BRIEF DESCRIPTION OF DRAWINGS

FIG. 1 is a diagram of an RDMA principle according to this application;
FIG. 2 is a diagram of an RDMA protocol stack according to this application;
FIG. 3 is a diagram of an RDMA service according to this application;
FIG. 4 is a diagram of a structure of a management packet of RDMA according to this application;
FIG. 5 is a diagram of a structure of a communication system according to this application;
FIG. 6 is a diagram of a structure of another communication system according to this application;
FIG. 7a and FIG. 7b are diagrams of convergence of an RDMA protocol stack and a wireless communication protocol stack according to this application;
FIG. 8a and FIG. 8b are other diagrams of convergence of an RDMA protocol stack and a wireless communication protocol stack according to this application;
FIG. 9 is a schematic flowchart of a communication method according to this application;
FIG. 10a and FIG. 10b are diagrams of distinguishing between packet types by using a QPN and a virtual lane number according to this application;
FIG. 11 is a schematic flowchart of another communication method according to this application;
FIG. 12 is a diagram of distinguishing between packet types by using virtual lane numbers according to this application;
FIG. 13 is a diagram of distinguishing between packet types by using QPNs according to this application;
FIG. 14 is a schematic flowchart of another communication method according to this application;
FIG. 15 is a schematic flowchart of another communication method according to this application;
FIG. 16 is a diagram of a GTP-U tunnel according to this application;
FIG. 17 is a schematic flowchart of another communication method according to this application;
FIG. 18 to FIG. 21 are diagrams of CM handshake-based link establishment procedures according to this application; and
FIG. 22 to FIG. 24 are diagrams of structures of communication apparatuses according to this application.

### DESCRIPTION OF EMBODIMENTS

In the descriptions of this application, unless otherwise specified, the character "/" indicates that associated objects are in an "or" relationship. For example, A/B may represent A or B. The term "and/or" in this application merely describes an association relationship between associated objects and indicates that three relationships may exist. For example, A and/or B may indicate three cases: Only A exists, both A and B exist, or only B exists, where A and B may be singular or plural.

In addition, in the descriptions of this application, "a plurality of" means two or more than two unless otherwise specified. "At least one of the following items (pieces)" or a similar expression thereof indicates any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural.

In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

In embodiments of this application, the term "example" or "for example" is used for representing giving an example, an illustration, or a description. Any embodiment or design solution described as an "example" or "for example" in embodiments of this application should not be explained as being more preferred or having more advantages than another embodiment or design solution. Exactly, use of the terms such as "example" or "for example" is intended to present a related concept in a specific manner for ease of understanding.

It may be understood that an "embodiment" used throughout this specification means that particular features, structures, or characteristics related to this embodiment are included in at least one embodiment of this application. Therefore, embodiments in the entire specification are not necessarily a same embodiment. In addition, these particular features, structures, or characteristics may be combined in one or more embodiments in any appropriate manner. It may be understood that sequence numbers of the processes do not mean execution sequences in various embodiments of this application. The execution sequences of the processes should be determined based on functions and internal logic of the processes, and should not be construed as any limitation on implementation processes of embodiments of this application.

It may be understood that, in this application, "when", "if", and "in a case of" mean that corresponding processing is performed in an objective situation, are not intended to limit time, do not require a determining action during implementation, and do not mean any other limitation.

It may be understood that in some scenarios, some optional features in embodiments of this application may be independently implemented without depending on another feature, for example, a solution on which the optional features are currently based, to resolve a corresponding technical problem and achieve corresponding effects. Alternatively, in some scenarios, the optional features may be combined with other features based on a requirement. Correspondingly, the apparatuses provided in embodiments of this application may also correspondingly implement these features or functions. Details are not described herein.

In this application, unless otherwise specified, mutual reference may be made between same or similar parts of different embodiments. In embodiments of this application and the implementations/implementing methods/implementation methods in embodiments, unless otherwise specified or a logical conflict occurs, terms and/or descriptions are consistent and may be mutually referenced between different embodiments and between the implementations/implementing methods/implementation methods in embodiments. Technical features in the different embodiments and the implementations/implementing methods/implementation methods in embodiments may be combined to form a new embodiment, implementation, implementing method, or implementation method based on an internal logical relationship thereof. The following implementations of this application are not intended to limit the protection scope of this application.

For ease of understanding of the technical solutions in embodiments of this application, the following first briefly describes technologies related to this application.

### 1. Remote direct memory access (remote direct memory access, RDMA)

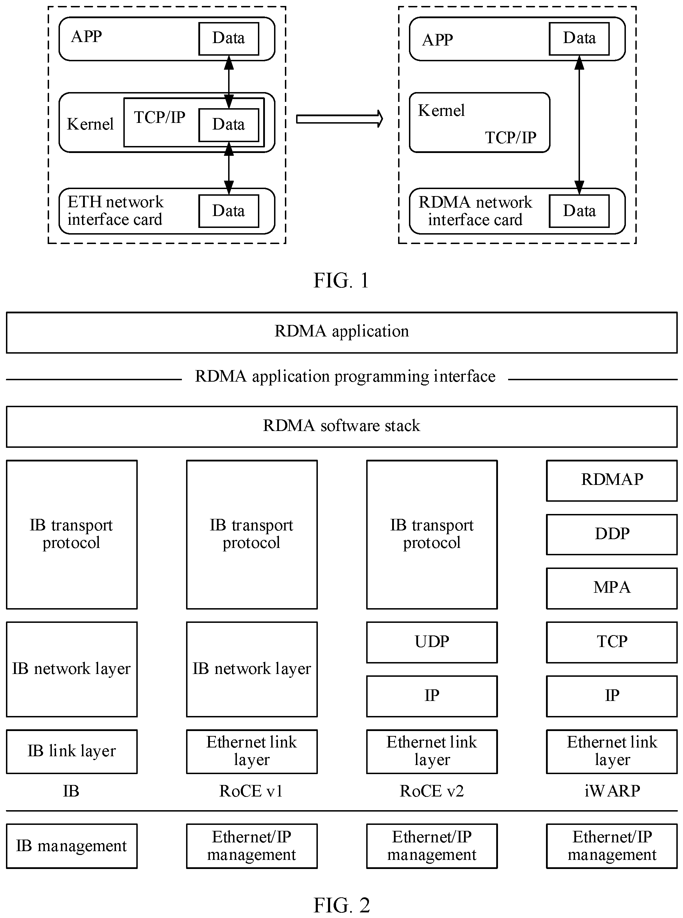

In the face of high-concurrency and low-latency input/output (input/output, I/O) applications such as high-performance computing and big data analysis, a conventional transmission control protocol (transmission control protocol, TCP)/internet protocol (internet protocol, IP) software and hardware architecture cannot meet requirements of these applications. This is because messages are sent through a kernel in conventional TCP/IP network communication. This communication mode has very high overheads in data migration and data replication. As shown in the left part in FIG. 1, data needs to be migrated by a central processing unit (central processing unit, CPU) from an application (application, APP) to a kernel (kernel) , and then be migrated from the kernel to a network interface card (for example, an ethernet port (ETH Net Port)).

RDMA technology is used to address data processing latency on a server side during network transmission. Based on the RDMA technology, memory data can be directly accessed through a network interface, thereby eliminating the involvement of an operating system kernel. As shown in the right part in FIG. 1, an RDMA network interface card directly reads APP data without CPU involvement for data migration.

RDMA allows for high-throughput and low-latency network communication, and is particularly suitable for use in large-scale parallel computer clusters. When a rate reaches up to 40 Gbps (gigabits per second, Gbps), a conventional TCP/IP transmission mode may cause CPU utilization to be as high as 100%. However, when the RDMA network interface card is used, the CPU utilization is as low as 5%.

### 2. RDMA protocol stack

There are various applications of the RDMA technology, such as InfiniBand (InfiniBand, IB), RDMA over converged ethernet (RDMA over converged ethernet, RoCE), and an internet wide-area RDMA protocol (internet wide-area RDMA protocol, iWARP).

InfiniBand is an RDMA technology based on an InfiniBand architecture, and provides a channel-based point-to-point message queue forwarding model. Each application can directly obtain data messages of the application through a created virtual lane (virtual lane, VL) without involving other operating systems and protocol stacks. As shown in FIG. 2, the InfiniBand architecture includes an IB transport layer (IB transport protocol), an IB network layer (IB network layer), and an IB link layer (IB link layer). An application layer of the InfiniBand architecture uses the RDMA technology and may provide RDMA read/write access between remote nodes to completely offload CPU workloads. Network transmission is high-bandwidth transmission. A specific retransmission mechanism is set for the link layer to ensure quality of service without data buffering.

RoCE protocols have two versions: a RoCE v1 protocol and a RoCE v2 protocol. As shown in FIG. 2, the RoCE v1 protocol carries RDMA based on an ethernet and can be deployed only on a layer 2 network. A packet structure of the RoCE v1 protocol is to add a layer 2 ethernet packet header to a packet of the original IB architecture, and a RoCE packet is identified by Ethertype 0x8915. The RoCE v2 protocol carries RDMA based on a user datagram protocol (user datagram protocol, UDP)/an IP protocol and can be deployed on a layer 3 network. A packet structure of the RoCE v2 protocol is to add a UDP header, an IP header, and a layer 2 ethernet packet header to a packet of the original IB architecture, and a RoCE packet is identified by a UDP destination port number 4791.

iWARP is an RDMA technology based on the ethernet and the TCP/IP protocol and may run on a standard ethernet infrastructure. iWARP does not specify physical layer information. Therefore, iWARP can work at an upper layer of any network using the TCP/IP protocol. iWARP allows a plurality of transmission types to share a same physical connection, such as networks, I/O, file systems, block storage, and inter-processor messaging. As shown in FIG. 2, a marker protocol data unit (protocol data unit, PDU) aligned framing (marker PDU aligned framing, MPA) protocol layer is used as an adaptation layer, and conversion is performed between a message-based direct data placement (direct data placement, DDP) protocol and a byte stream-based TCP protocol. An RDMA protocol (RDMAP protocol, RDMAP) above DDP is used for providing RDMA semantics for upper-layer protocols.

### 3. RDMA packet

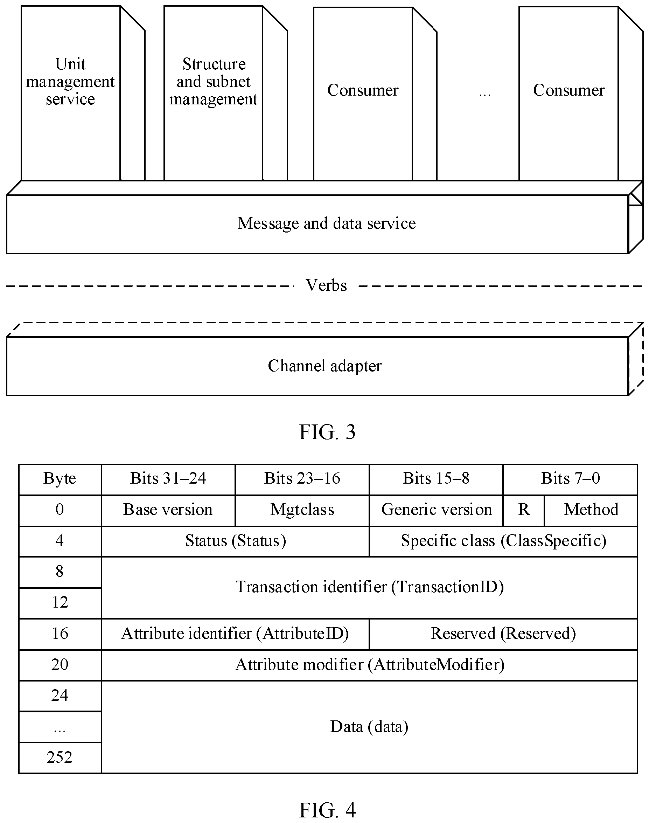

As shown in FIG. 3, management services and consumers exist above a transport layer of RDMA. Therefore, a management packet (also referred to as a control packet or a management control packet) and a data packet exist above the transport layer. For example, a format of the management packet (management datagram, MAD) is shown in FIG. 4.

Refer to FIG. 4. A byte MgmtClass indicates a type of a management packet, and different management packets are defined by defining MgmtClass values. For example, a management type of 0x01/0x81 indicates a subnet management (subnet management, SM) MAD, a management type of 0x03 indicates a subnet administration (subnet administration, SA) MAD, a management type of 0x04 indicates a performance (performance) MAD, and a management type of 0x07 indicates a communication management (communication management, CM) MAD. For meanings of other fields shown in FIG. 4, refer to related descriptions in the existing RDMA standard. Details are not described herein.

Generally, a queue pair number (queue pair number, QPN) of a transport layer of an SM management packet is 0, a QPN of another type of management packet is 1, and a QPN of a data packet is greater than 1. In addition, at the link layer, the SM management packet is mapped to a VL whose virtual lane number is 15. Another VL is reused for other types of management packets and data packets. The VL whose virtual lane number is 15 does not require quality of service (quality of service, QoS) control, and packets are sent immediately after arriving in the queue. A credit mechanism is used for performing QoS flow control on packets on other VLs. That is, a priority of the SM management packet is higher than that of the data packet or another management packet of RDMA.

Generally, the SM management packet is transmitted between a subnet manager and an RDMA node in a primary-secondary mode. The CM management packet uses a peer-to-peer mode of a peer agent. This is because remote memory read/write can be performed between any two communication nodes in RDMA communication. The CM management packet is used for obtaining a queue pair context (queue pair context, QPC) during remote memory read/write. Therefore, the peer-to-peer mode is used.

With the development of wireless communication, convergence of RDMA and wireless communication becomes an inevitable trend. In 2022, Intel published the article "6G Cloud-Native System: Vision, Challenges, Architecture Framework and Enabling Technologies" in Institute of Electrical and Electronics Engineers (institute of electrical and electronics engineers, IEEE) access. It is mentioned that a CM management packet of RDMA is transmitted by using radio resource control (radio resource control, RRC) signaling on a control plane through an air interface, and a data packet and another management packet of RDMA, for example, an SM management packet, are transmitted on a user plane through the air interface.

However, if both the SM management packet and the data packet are transmitted on the user plane through the air interface, currently, high-priority transmission of the SM management packet cannot be implemented. Consequently, RDMA control information cannot be transmitted to the RDMA node in a timely manner, leading to degradation of remote memory read performance. Based on this, this application provides an RDMA-based communication method. According to the method, a management packet of RDMA can be transmitted to the RDMA node in a timely manner, thereby improving remote memory read performance.

The technical solutions in embodiments of this application may be applied to various communication systems. The communication system may be a third generation partnership project (third generation partnership project, 3GPP) communication system, for example, a 4th generation (4th generation, 4G) system such as a long term evolution (long term evolution, LTE) system, a 5th generation (5th generation, 5G) system such as a new radio (new radio, NR) system, an LTE and 5G hybrid networking system, a non-terrestrial network (non-terrestrial network, NTN) system, an internet of things (internet of things, IoT) system, a narrow band IoT (narrow band IoT, NB-IoT) system, or another next generation communication system. Alternatively, the communication system may be a non-3GPP communication system. This is not limited.

The foregoing communication systems applicable to this application are merely examples for descriptions, and the communication systems applicable to this application are not limited thereto. The communication systems provided in this application constitute no limitation on the solutions of this application. This applies throughout and will not be repeated below.

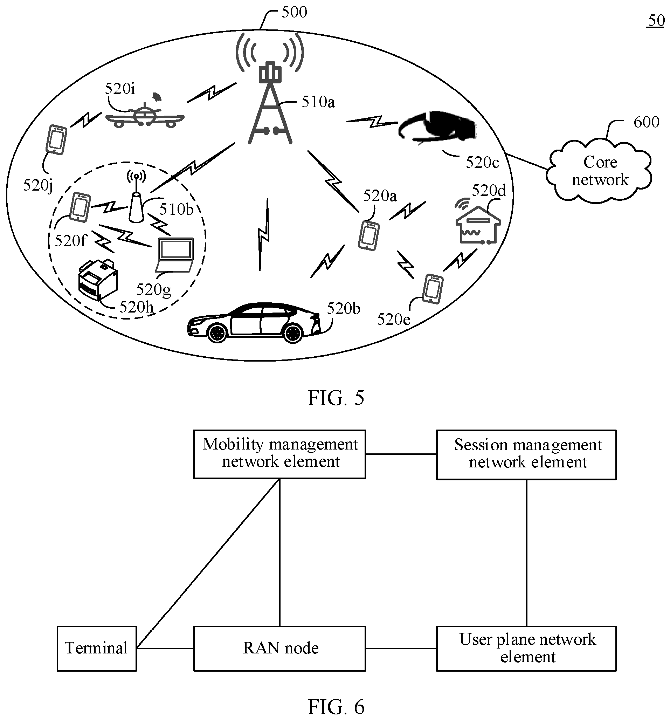

FIG. 5 is a diagram of a possible and non-limiting system. As shown in FIG. 5, the communication system 50 includes a radio access network (radio access network, RAN) 500 and a core network (core network, CN) 600. The RAN 500 includes at least one RAN node (510a and 510b in FIG. 1, collectively referred to as 510) and at least one terminal (520a to 520j in FIG. 5, collectively referred to as 520). The RAN 500 may further include another RAN node, for example, a wireless relay device and/or a wireless backhaul device (not shown in FIG. 5). The terminal 520 is connected to a RAN node 510 in a wireless manner. For example, as shown in FIG. 6, the core network 600 includes a user plane network element. Further, the core network 600 may further include a mobility management network element, a session management network element, and another network element.

The RAN node 510 is connected to the core network 600 in a wireless or wired manner. A core network element in the core network 600 and the RAN node 510 in the RAN 500 may be different physical devices, or may be a same physical device that integrates a core network logical function and a radio access network logical function.

The RAN 500 may be a 3GPP-related cellular system, for example, a 4G or 5G mobile communication system, or a future-oriented evolved system (for example, a 6th generation (6th generation, 6G) mobile communication system). The RAN 500 may alternatively be an open access network (open RAN, O-RAN or ORAN), a cloud radio access network (cloud radio access network, CRAN), or a wireless fidelity (wireless fidelity, Wi-Fi) system. Alternatively, the RAN 500 may be a communication system that converges the foregoing two or more systems.

The RAN node 510 may also be sometimes referred to as an access network device, a RAN entity, an access node, or the like, and forms a part of the communication system, to help the terminal implement radio access. A plurality of RAN nodes 510 in the communication system 50 may be nodes of a same type, or may be nodes of different types. In some scenarios, roles of the RAN node 510 and the terminal 520 are relative. For example, a network element 520i in FIG. 5 may be a helicopter or an uncrewed aerial vehicle, and may be configured as a mobile base station. For the terminal 520j that accesses the RAN 500 through the network element 520i, the network element 520i is a base station. However, for the base station 510a, the network element 520i is a terminal. Sometimes, both the RAN node 510 and the terminal 520 are referred to as communication apparatuses. For example, the network elements 510a and 510b in FIG. 5 may be understood as communication apparatuses having a base station function, and the network elements 520a to 520j may be understood as communication apparatuses having a terminal function.

In a possible scenario, the RAN node may be a base station (base station), an evolved NodeB (evolved NodeB, eNodeB), an access point (access point, AP), a transmission reception point (transmission reception point, TRP), a next generation NodeB (next generation NodeB, gNB), a next generation base station in a 6G mobile communication system, a base station in a future mobile communication system, an access node in a Wi-Fi system, or the like. The RAN node may be a macro base station (for example, 510a in FIG. 5), a micro base station or an indoor station (for example, 510b in FIG. 5), a relay node or a donor node, or a radio controller in a CRAN scenario. Optionally, the RAN node may alternatively be a server, a wearable device, a vehicle, a vehicle-mounted device, or the like. For example, an access network device in a vehicle-to-everything (vehicle-to-everything, V2X) technology may be a road side unit (road side unit, RSU). All or a part of functions of the RAN node in this application may alternatively be implemented by using a software function running on hardware, or may be implemented by using an instantiated virtualization function on a platform (for example, a cloud platform). Alternatively, the RAN node in this application may be a logical node, a logical module, or software that can implement all or a part of functions of the RAN node.

In another possible scenario, a plurality of RAN nodes collaborate to assist the terminal in implementing radio access, and different RAN nodes respectively implement some functions of the base station. For example, the RAN node may be a central unit (central unit, CU), a distributed unit (distributed unit, DU), a CU-control plane (control plane, CP), a CU-user plane (user plane, UP), a radio unit (radio unit, RU), or the like. The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP and the CU-UP), the DU, and the RU in this application may be implemented through a software module, a hardware module, or a combination of a software module and a hardware module.

The terminal may also be referred to as a terminal device, user equipment (user equipment, UE), a mobile station, a mobile terminal, or the like. The terminal may be widely used in various scenarios, for example, device-to-device (device-to-device, D2D) communication, vehicle-to-everything (vehicle-to-everything, V2X) communication, machine-type communication (machine-type communication, MTC), internet of things (internet of things, IoT), virtual reality, augmented reality, industrial control, autonomous driving, telemedicine, smart grid, smart furniture, smart office, smart wearable, smart transportation, and smart city. The terminal may be a mobile phone, a tablet computer, a computer with a wireless transceiver function, a wearable device, a vehicle, an uncrewed aerial vehicle, a helicopter, an airplane, a ship, a robot, a robotic arm, a smart home device, or the like. A device form of the terminal is not limited in embodiments of this application.

The user plane network element is mainly responsible for processing a user packet, such as forwarding and charging. In a 5G communication system, the user plane network element may be a user plane function (user plane function, UPF) network element. In future communication such as 6G communication, the user plane network element may still be a UPF network element or have another name. This is not limited in embodiments of this application.

The mobility management network element is mainly used for attachment, mobility management, a tracking area update process of a terminal in a mobile network. The mobility management device is configured for termination of a non-access stratum (non-access stratum, NAS) message, completion of registration management, connection management, and reachability management, tracking area list (tracking area list, TA list) allocation, mobility management, and the like, and transparently routes a session management (session management, SM) message to the session management network element. In the 5G communication system, the mobility management network element may be an access and mobility management function (access and mobility management function, AMF) network element. In the future communication system such as the 6G communication system, the mobility management network element may still be the AMF network element or have another name. This is not limited in embodiments of this application.

The session management network element is mainly responsible for session management in a mobile network, for example, session establishment, modification, and release. Specific functions include, for example, allocating an IP address to a user or selecting a UPF that provides a packet forwarding function. In the 5G communication system, the session management network element may be a session management function (session management function, SMF) network element. In future communication such as 6G communication, the session management network element may still be an SMF network element or have another name. This is not limited in embodiments of this application.

It should be noted that the communication systems described in embodiments of this application are intended to describe the technical solutions in embodiments of this application more clearly, but do not constitute a limitation on the technical solutions provided in embodiments of this application. It can be learned by a person of ordinary skill in the art that the technical solutions provided in embodiments of this application are also applicable to similar technical problems with evolution of a network architecture and emergency of a new service scenario.

With reference to the communication system shown in FIG. 5 or FIG. 6, the following describes the communication method provided in embodiments of this application by using interaction between a terminal, a RAN node, and a core network element as an example. It should be noted that, in the following embodiments of this application, a name of a message between a terminal, a RAN node, and a core network element, a name of each parameter, a name of each piece of information, or the like is merely an example, and may be another name in another embodiment. This is not specifically limited in the method provided in this application.

It may be understood that in embodiments of this application, the terminal, the RAN node, and the core network element may perform some or all steps in embodiments of this application. These steps or the operations are merely examples. In embodiments of this application, other operations or variations of various operations may be further performed. In addition, the steps may be performed in a sequence different from that presented in embodiments of this application, and not all of the operations in embodiments of this application may be necessarily performed.

It may be understood that, in this application, an example in which the RAN node, the terminal, and the core network element are used as execution entities of an interaction example is used for description. However, the execution entities of the interaction example are not limited in this application. For example, the method performed by the RAN node in this application may be performed by a module (for example, a chip, a chip system, or a processor) used in the RAN node, or may be implemented by a logical node, a logical module, or software that can implement all or some functions of the RAN node. The method performed by the terminal in this application may be performed by a module (for example, a chip, a chip system, or a processor) used in the terminal, or may be implemented by a logical node, a logical module, or software that can implement all or some functions of the terminal. The method performed by the core network element in this application may be performed by a module (for example, a chip, a chip system, or a processor) used in the core network element, or may be implemented by a logical node, a logical module, or software that can implement all or some functions of the core network element.

In addition, in this application, "sending information/a message" may be understood as that one device sends information/a message to another device, or may be understood as that one logical module in a device sends information/a message to another logical module. For example, "the terminal sends information" may be understood as that the terminal sends information to another device (for example, a RAN node), or may be understood as that a logical module 1 (for example, a processing module) in the terminal sends information to a logical module 2 (for example, a transceiver module) in the terminal.

In this application, "receiving information/a message" may be understood as that one device receives information/a message from another device, or may be understood as that a logical module in a device receives information/a message from another logical module. For example, "the terminal receives information" may be understood as that the terminal receives information from another device (for example, a RAN node), or may be understood as that a logical module 1 (for example, a processing module) in the terminal receives information from a logical module 2 (for example, a transceiver module) in the terminal.

In this application, "sending information/a message to... (for example, a terminal)" or a related illustration in the accompanying drawings may be understood as that a destination of the information/the message is the terminal, and may include directly or indirectly sending the information to the terminal. "Receiving information from... (for example, a RAN node)", "receiving information that is from... (for example, a RAN node)", "receiving information sent by (for example, a RAN node)", or a related diagram in the accompanying drawings may be understood as that a source of the information is the RAN node, and may include directly or indirectly receiving information from the RAN node. Information may undergo necessary processing, for example, a format change, between a source for sending the information and a destination. However, the destination may understand valid information from the source. Similar descriptions in this application may be understood similarly, and details are not described herein again.

To better understand the solutions in this application, before the communication method provided in this application is described, a solution of converging an RDMA protocol stack and a wireless communication protocol stack provided in this application is first described.

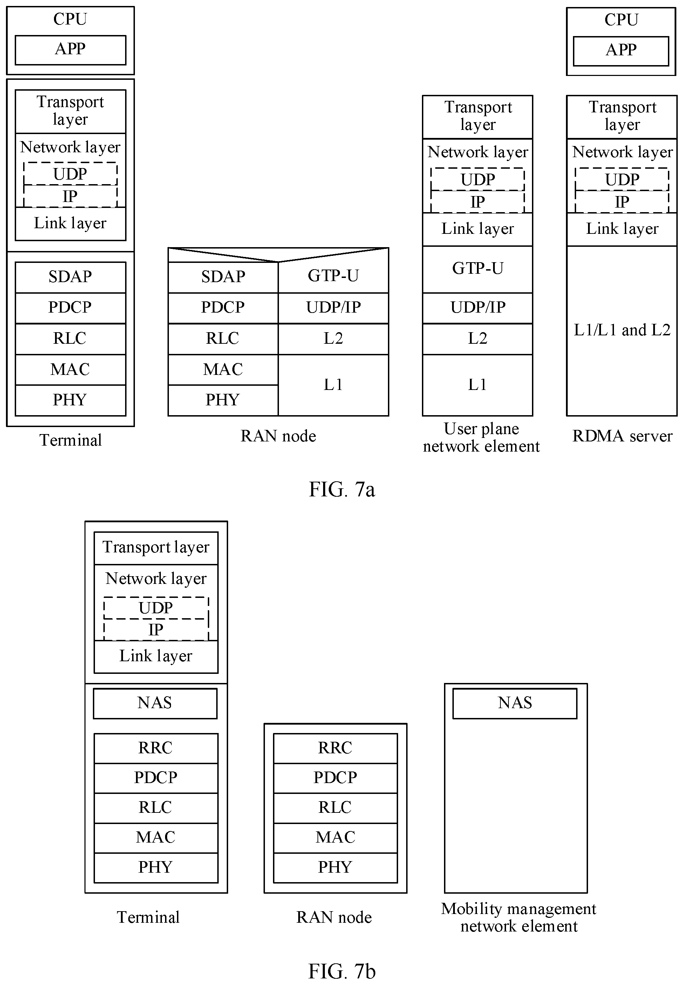

FIG. 7a is a diagram of convergence of a user plane protocol stack according to this application. On a terminal side and a RAN node side, an air interface wireless communication protocol stack sequentially includes a service data adaptation protocol (service data adaptation protocol, SDAP) layer, a packet data convergence protocol (packet data convergence protocol, PDCP) layer, a radio link control (radio link control, RLC) layer, a media access control (media access control, MAC) layer, and a physical (physical, PHY) layer from top to bottom. In addition, the terminal side is externally connected to RDMA hardware to implement an RDMA protocol stack. The RDMA protocol stack includes a transport layer (for example, an IB transport layer), a network layer (for example, an IB network layer), and a link layer (for example, an IB link layer). The network layer may be replaced with an IP layer and a UDP layer.

Between the RAN node and the user plane network element, the user plane protocol stack includes a general packet radio service (general packet radio service, GPRS) tunnelling protocol for user plane (GPRS tunnelling protocol for user plane, GTP-U), a UDP/IP layer, a layer 2 (layer 2, L2), and a layer 1 (layer 1, L1). An RDMA transport layer packet, an RDMA network layer packet, and a link layer frame (such as an RDMA link layer frame or an ethernet frame) may be used as GTP-U payloads. On a user plane network element side, an RDMA link layer, an RDMA network layer, and an RDMA transport layer may be further included above a GTP-U layer. An RDMA server side includes an RDMA transport layer, an RDMA network layer, an RDMA link layer, and a layer 1 (or a layer 1 and a layer 2).

FIG. 7b is a diagram of convergence of a control plane protocol stack according to this application. On a terminal side and a RAN node side, an air interface wireless protocol stack includes an RRC layer, a PDCP layer, an RLC layer, a MAC layer, and PHY. In addition, the terminal side and a mobility management network element side include a NAS stratum. The terminal side is externally connected to RDMA hardware to implement an RDMA protocol stack. The RDMA protocol stack includes a transport layer, a network layer, and a link layer.

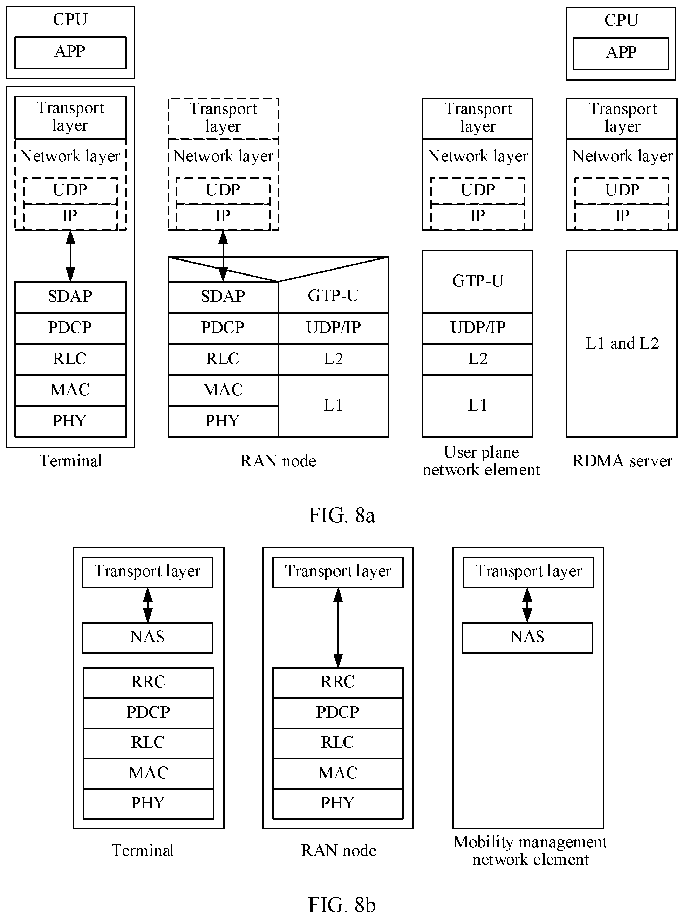

FIG. 8a is another diagram of convergence of a user plane protocol stack according to this application. A terminal has a transport layer capability of an RDMA protocol stack. The terminal may further include a network layer of the RDMA protocol stack, or a function of the network layer of the RDMA protocol stack may be implemented by a wireless communication protocol stack of the terminal. A link layer function of the RDMA protocol stack is implemented by the wireless communication protocol stack. For example, the network layer may be replaced with an IP layer and a UDP layer.

Between a RAN node and a user plane network element, the user plane protocol stack includes a GTP-U, a UDP/IP layer, a layer 2 (layer 2, L2), and a layer 1 (layer 1, L1). An RDMA transport layer packet and an RDMA network layer packet may be used as GTP-U payloads. Optionally, the RAN node, the user plane network element, or an RDMA server side has a transport layer and/or a network layer of the RDMA protocol stack.

FIG. 8b is another diagram of convergence of a control plane protocol stack according to this application. On a terminal side, a RAN node side, or a mobility management network element side, a protocol stack includes a transport layer of an RDMA protocol stack. On the terminal side and the RAN node side, an air interface protocol stack includes an RRC layer, a PDCP layer, an RLC layer, a MAC layer, and PHY. In addition, the terminal side and the mobility management network element side include a NAS stratum.

For example, the architectures shown in FIG. 7a and FIG. 7b may be referred to as RDMA over wireless. The architectures shown in FIG. 8a and FIG. 8b may be referred to as RDMA in wireless. In a CU-DU architecture or an O-RAN architecture, an RDMA protocol stack on the RAN node side, for example, the RDMA transport layer and/or the network layer, may be deployed on a CU or an O-CU.

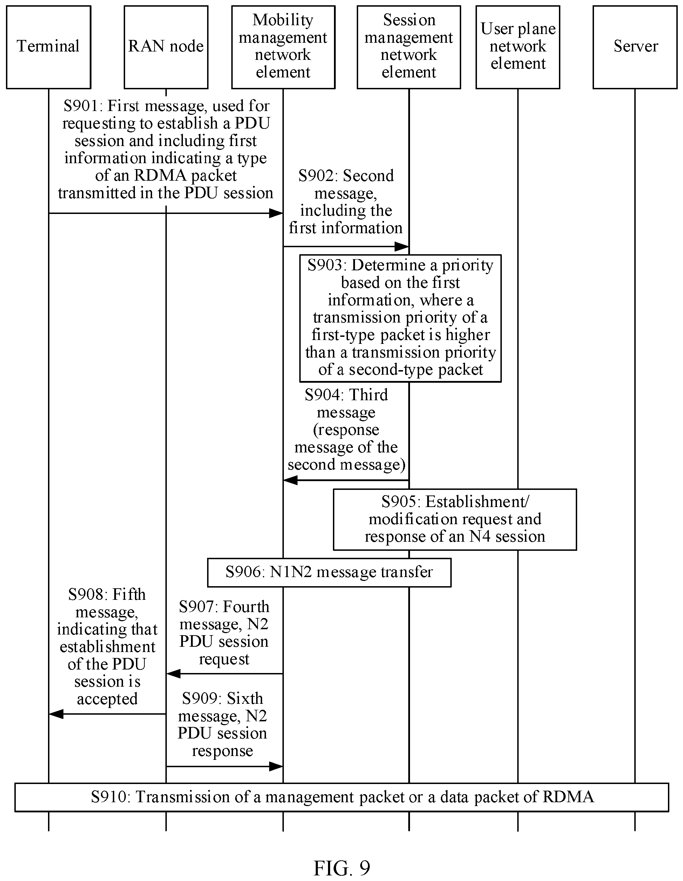

The following describes the communication method provided in this application. FIG. 9 shows a communication method according to this application. The method includes the following steps.

S901: A terminal sends a first message to a mobility management network element. Correspondingly, the mobility management network element receives the first message from the terminal.

The first message is used for requesting to establish a PDU session. The PDU session is used for transmitting an RDMA packet. For example, the first message is a PDU session establishment request message.

The first message includes first information.

In a first possible implementation, the first information indicates a type of the RDMA packet transmitted in the PDU session. The type of the RDMA packet includes a first-type packet and a second-type packet, and a transmission priority of the first-type packet is higher than a transmission priority of the second-type packet.

For example, the first-type packet is a management packet, for example, a management packet of RDMA, for example, an SM management packet, a CM management packet, or an SA management packet. The second-type packet is a data packet. Alternatively, the first-type packet is a first-type management packet, and the first-type management packet is used for subnet management. For example, the first-type management packet is an SM management packet. The second-type packet includes a second-type management packet and/or a data packet. The second-type management packet is another management packet other than the first-type management packet, for example, a management packet (that is, a CM management packet) used for communication management or an SA management packet.

For example, the PDU session may be used for transmitting both a first-type packet of RDMA and a second-type packet of RDMA. For example, the first-type packet is transmitted by using a first-type QoS flow of the PDU session, and the second-type packet is transmitted by using a second-type QoS flow of the PDU session. The first-type QoS flow may include one or more QoS flows, and the second-type QoS flow may include one or more QoS flows. Identifiers of the one or more QoS flows included in the first-type QoS flow may be the same or different, and identifiers of the one or more QoS flows included in the second-type QoS flow may be the same or different.

For example, in the first possible implementation, the type, indicated by the first information, of the RDMA packet transmitted in the PDU session may be understood as a type of an RDMA packet to be transmitted in the PDU session, or a type of an RDMA packet that is first to be transmitted after establishment of the PDU session is completed.

In a possible implementation, the first information includes a transport layer identifier of the RDMA packet. When the transport layer identifier is less than or equal to a first value, the type of the RDMA packet transmitted in the PDU session is the first-type packet; or when the transport layer identifier is greater than a first value, the type of the RDMA packet transmitted in the PDU session is the second-type packet. Alternatively, when the transport layer identifier is greater than a first value, the type of the RDMA packet transmitted in the PDU session is the first-type packet; or when the transport layer identifier is less than or equal to a first value, the type of the RDMA packet transmitted in the PDU session is the second-type packet. In this case, the first-type packet corresponds to the management packet of RDMA, and the second-type packet corresponds to a data packet of RDMA.

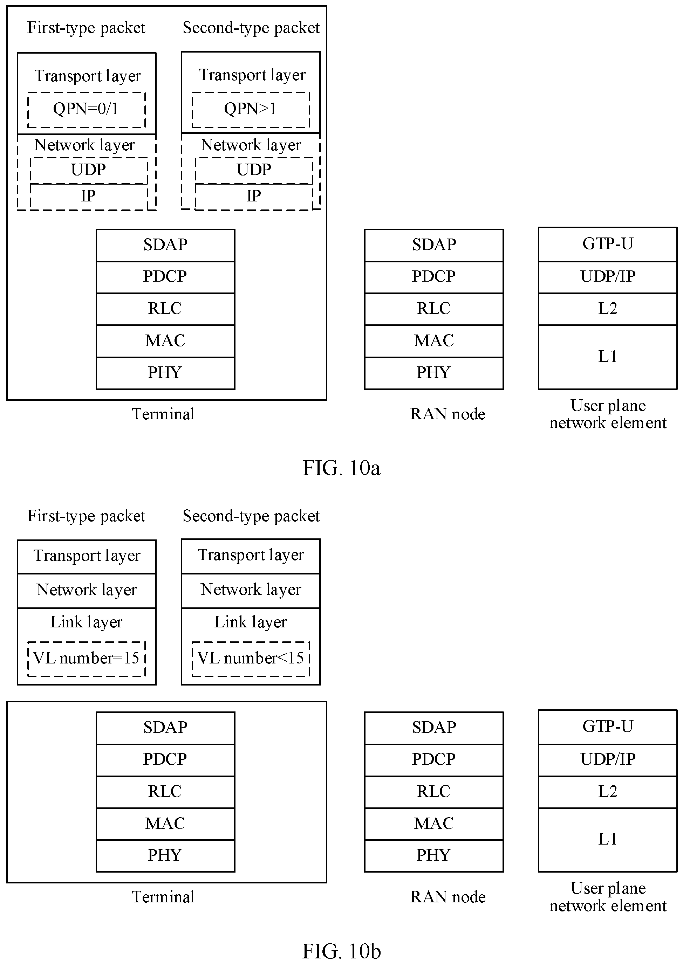

For example, the transport layer identifier may also be referred to as a layer 4 identifier. As shown in FIG. 10a, the transport layer identifier may be, for example, a QPN, and the first value may be, for example, equal to 1. To be specific, when the QPN is 0 or 1, the management packet of RDMA is transmitted in the PDU session; or when the QPN is greater than 1, the data packet of RDMA is transmitted in the PDU session. Certainly, the transport layer identifier may alternatively be another transport layer identifier, and the first value may alternatively be another value. This is not specifically limited in this application.

In another possible implementation, the first information includes a link layer identifier of the RDMA packet. When the link layer identifier is greater than or equal to a second value, the type of the RDMA packet transmitted in the PDU session is the first-type packet; or when the link layer identifier is less than a second value, the type of the RDMA packet transmitted in the PDU session is the second-type packet. Alternatively, when the transport layer identifier is less than a second value, the type of the RDMA packet transmitted in the PDU session is the first-type packet; or when the transport layer identifier is greater than or equal to a second value, the type of the RDMA packet transmitted in the PDU session is the second-type packet. In this case, the first-type packet corresponds to the first-type management packet, and the second-type packet corresponds to the second-type management packet and/or the data packet.

For example, the link layer identifier may also be referred to as a layer 2 identifier. As shown in FIG. 10b, the link layer identifier may be, for example, a virtual lane number, and the second value may be 15. To be specific, when the virtual lane number is greater than or equal to 15, a first-type management packet of RDMA is transmitted in the PDU session; or when the virtual lane number is less than 15, a second-type management packet and/or a data packet of RDMA are/is transmitted in the PDU session. Certainly, the link layer identifier may alternatively be another link layer identifier, and the second value may alternatively be another value. This is not specifically limited in this application.

In a second possible implementation, the first information indicates that the PDU session is used for transmitting the first-type packet of RDMA, and is not used for transmitting the second-type packet of RDMA; or the first information indicates that the PDU session is used for transmitting the second-type packet of RDMA, and is not used for transmitting the first-type packet of RDMA. A transmission priority of the first-type packet is higher than a transmission priority of the second-type packet.

In other words, in the second possible implementation, the first-type packet and the second-type packet are transmitted by using different PDU sessions. For example, the first-type packet is transmitted by using a first-type QoS flow of a PDU session, and a second-type packet is transmitted by using second-type QoS of another PDU session.

In a possible implementation, the first information includes a transport layer identifier of the RDMA packet. When the transport layer identifier is less than or equal to a first value, the PDU session is used for transmitting the first-type packet of RDMA, and is not used for transmitting the second-type packet of RDMA; or when the transport layer identifier is greater than a first value, the PDU session is used for transmitting the second-type packet of RDMA, and is not used for transmitting the first-type packet of RDMA. Alternatively, when the transport layer identifier is greater than a first value, the PDU session is used for transmitting the first-type packet of RDMA, and is not used for transmitting the second-type packet of RDMA; or when the transport layer identifier is less than or equal to a first value, the PDU session is used for transmitting the second-type packet of RDMA, and is not used for transmitting the first-type packet of RDMA. In this case, the first-type packet corresponds to the management packet of RDMA, and the second-type packet corresponds to a data packet of RDMA. For the transport layer identifier and the first value, refer to related descriptions in the foregoing first implementation. Details are not described herein again.

In another possible implementation, the first information includes a link layer identifier of the RDMA packet. When the link layer identifier is greater than or equal to a second value, the PDU session is used for transmitting the first-type packet of RDMA, and is not used for transmitting the second-type packet of RDMA; or when the link layer identifier is less than a second value, the PDU session is used for transmitting the second-type packet of RDMA, and is not used for transmitting the first-type packet of RDMA. Alternatively, when the link layer identifier is less than a second value, the PDU session is used for transmitting the first-type packet of RDMA, and is not used for transmitting the second-type packet of RDMA; or when the link layer identifier is greater than or equal to a second value, the PDU session is used for transmitting the second-type packet of RDMA, and is not used for transmitting the first-type packet of RDMA. In this case, the first-type packet corresponds to the first-type management packet, and the second-type packet corresponds to the second-type management packet and/or the data packet. For the link layer identifier and the second value, refer to related descriptions in the foregoing first implementation. Details are not described herein again.

Optionally, the first message further includes second information, and the second information indicates that a type of the PDU session is an RDMA session. The RDMA session may be understood as a new PDU session type provided in this application, and represents a PDU session used for transmitting the RDMA packet. The RDMA session may also have another name, for example, an IB session. The name may represent a PDU session used for transmitting an RDMA packet. The session name is not specifically limited in this application.

S902: The mobility management network element sends a second message to a session management network element. Correspondingly, the session management network element receives the second message from the mobility management network element.

The second message includes the first information. Further, when the first message includes the second information, the second message further includes the second information.

For example, the mobility management network element may send the first information or the first information and the second information carried in a session management container to the session management network element. The second message may be a PDU session_create session management context request message.

S903: The session management network element determines a priority of a QoS flow in the PDU session or a priority of the PDU session based on the first information.

In a first possible implementation, when the first information indicates the type of the RDMA packet transmitted in the PDU session, the session management network element determines the priority of the QoS flow in the PDU session. For example, the session management network element may determine that the first-type packet is transmitted by using the first-type QoS flow of the PDU session, and the second-type packet is transmitted by using the second-type QoS flow of the PDU session. In other words, the first-type QoS flow and the second-type QoS flow are included in a same PDU session. In addition, the session management network element further determines that a priority of the first-type QoS flow is higher than a priority of the second-type QoS flow.

In a second possible implementation, when the first information indicates that the PDU session is used for transmitting the first-type packet of RDMA, and is not used for transmitting the second-type packet of RDMA; or when the first information indicates that the PDU session is used for transmitting the second-type packet of RDMA, and is not used for transmitting the first-type packet of RDMA, the session management network element determines the priority of the PDU session.

For example, if the PDU session is used for transmitting the first-type packet, and is not used for transmitting the second-type packet, the session management network element determines that the priority of the PDU session is a high priority; or if the PDU session is used for transmitting the second-type packet and is not used for transmitting the first-type packet, the session management network element determines that the priority of the PDU session is a low priority. A priority of a QoS flow included in a high-priority PDU session is higher than that of a QoS flow included in a low-priority PDU session.

For example, when the PDU session is used for transmitting the first-type packet, and is not used for transmitting the second-type packet, the first-type packet may be transmitted by using the first-type QoS flow of the PDU session, and the second-type packet is transmitted by using a second-type QoS flow of another PDU session. When the PDU session is used for transmitting the second-type packet, and is not used for transmitting the first-type packet, the second-type packet may be transmitted by using the second-type QoS flow of the PDU session, and the first-type packet may be transmitted by using a first-type QoS flow of another PDU session. In other words, the first-type QoS flow and the second-type QoS flow are included in different PDU sessions. In addition, a priority of the first-type QoS flow is higher than a priority of the second-type QoS flow.

S904: The session management network element sends a third message to the mobility management network element. Correspondingly, the mobility management network element receives the third message from the session management network element.

The third message is a response message of the second message. For example, the third message may be a PDU session_create session management context response message.

For example, the third message includes a PDU session identifier, the priorities of the first-type QoS flow and the second-type QoS flow (corresponding to the first possible implementation in S903), a PDU session usage, or the priority of the PDU session (corresponding to the second possible implementation in S903).

S905: Establishment/modification request and response of an N4 session.

For example, the N4 session may be understood as a session or a transmission channel between the session management network element and a user plane network element. The session or the transmission channel between the session management network element and the user plane network element may also have another name, that is, the N4 session may also have another name. A name of the N4 session is not specifically limited in this application.

In a possible implementation, in step S905, the session management network element sends the establishment/modification request of the N4 session to the user plane network element. The establishment/modification request of the N4 session is used for providing, for the user plane network element, a data packet detection, execution, and reporting rule required by the PDU session, may be further used for providing the priority of the QoS flow or the PDU session determined in step S903, and is used for requesting core network tunnel information (CN Tunnel Info) from the user plane network element. The core network tunnel information is GTP-U tunnel information of an uplink data packet, for example, a GTP-U tunnel identifier on a user plane network element side and IP address information of the user plane network element.

After receiving the establishment/modification request of the N4 session from the session management network element, the user plane network element sends an establishment/modification response of the N4 session to the session management network element, where the establishment/modification response of the N4 session carries an N4 session establishment result and CN Tunnel Info.

S906: N1N2 message transfer (N1N2MessageTransfer).

For example, N1 may be understood as an interface between the terminal and the mobility management network element, and N2 may be understood as an interface between a RAN node and the mobility management network element. Certainly, N1 and N2 may also have other names. A name of the interface between the terminal and the mobility management network element and a name of the interface between the RAN node and the mobility management network element are not specifically limited in this application.

In a possible implementation, after receiving the establishment/modification response of the N4 session, the session management network element may send an N1N2 message transfer request to the mobility management network element, where the request includes N2 session management information sent to the RAN node and an N1 session management container (container) sent to the terminal.

For example, the N2 session management information includes PDU session establishment accept (PDU Session Establishment Accept), an IP address allocated by the user plane network element to the terminal, and the like. The N1 session management container includes a QoS flow identifier (QoS flow identifier, QFI), a QoS policy (QoS Profile), CN Tunnel Info, and the like.

After receiving the N1N2 message transfer request, the mobility management network element sends a response to the session management network element, to confirm that the N1N2 message transfer request is received.

S907: The mobility management network element sends a fourth message to the RAN node. Correspondingly, the RAN node receives the fourth message from the mobility management network element.

The fourth message includes a PDU session identifier for the terminal, a PDU session establishment accept message (including the N1 session management container), and N2 session management information. For example, the fourth message may be an N2 PDU session request message. The fourth message is a NAS message.

S908: The RAN node sends a fifth message to the terminal. Correspondingly, the terminal receives the fifth message from the RAN node.

The fifth message indicates that establishment of the PDU session is accepted. For example, the fifth message may be a PDU session establishment accept (PDU Session Establishment Accept) message. The fifth message includes the N1 session container. In addition, the RAN node further sends the PDU session identifier to the terminal.

Optionally, the RAN node further allocates access network tunnel information (AN Tunnel info) to the PDU session. The access network tunnel information is GTP-U tunnel information of a downlink data packet, for example, GTP-U tunnel information and IP address information of the RAN node.

S909: The RAN node sends a sixth message to the mobility management network element. Correspondingly, the mobility management network element receives the sixth message from the RAN node.

The sixth message is a response message of the fourth message, and includes the N2 session management information. The N2 session management information may include the PDU session identifier and the access network tunnel information. For example, the sixth message may be an N2 PDU session response message.

S910: The terminal transmits the RDMA packet to an RDMA server by using the PDU session.

For example, in the foregoing first possible implementation, the first-type packet may be transmitted by using the first-type QoS flow of the PDU session, and the second-type packet may be transmitted by using the second-type QoS flow of the PDU session. In the foregoing second possible implementation, one of the first-type packet and the second-type packet may be transmitted by using the PDU session, and the other packet may be transmitted by using another PDU session. For example, the first-type packet is transmitted by using a first-type QoS flow of a PDU session, and the second-type packet is transmitted by using a second-type QoS flow of another PDU session.

In a possible implementation, when the terminal transmits the RDMA packet to the RDMA server by using the PDU session, a transmission path of the RDMA packet is the RDMA server → the user plane network element → the RAN node → the terminal. After the RDMA packet arrives at the user plane network element, the user plane network element may map, based on information (for example, an IP 5-tuple or a packet type) about the RDMA packet, the RDMA packet to a corresponding QoS flow of a corresponding PDU session for transmission. For example, when the RDMA packet is the first-type packet, the RDMA packet is mapped to the first-type QoS flow for transmission; or when the RDMA packet is the second-type packet, the RDMA packet is mapped to the second-type QoS flow for transmission.

The QoS flow is identified by a QoS flow index (QoS flow index, QFI). A policy control function (policy control function, PCF) network element/the session management network element may configure, for the user plane network element and/or the RAN node, a QoS profile corresponding to the QFI. The QoS profile is used for defining a latency, a packet loss rate, a priority, and the like of the QoS flow identified by the QFI. For example, in a 5G system, the QoS profile is also referred to as a 5G QoS identifier (5G QoS identifier, 5QI). In addition, the session management network element may configure, for the user plane network element and/or the RAN node, an identifier of a QoS flow included in the first-type QoS flow and/or an identifier of a QoS flow included in the second-type QoS flow.

For example, when the user plane network element sends the QoS flow to the RAN node through a GTP-U tunnel, the QFI of the QoS flow may be carried. The RAN node may determine, by using the QFI, the QoS profile and a QoS flow type (the first-type QoS flow or the second-type QoS flow) that correspond to the QFI, to determine a priority of the QoS flow identified by the QFI, and transmit an RDMA packet to the terminal based on the priority of the QoS flow, for example, preferentially transmit a packet in a high-priority QoS flow to the terminal. The RAN node transmits the RDMA packet to the terminal via a computing radio bearer (computing radio bearer, CRB) or a data radio bearer (data radio bearer, DRB).

For example, the CRB may be understood as a transmission path used for transmitting computing data between the terminal and the RAN node. The RAN node does not need to forward the computing data received via the CRB to the user plane network element and a data network (data network, DN). At a PDCP layer, the computing data carried by the CRB may be understood as a newly added PDCP data PDU, and the RAN node or a computing resource of a core network may further perform data processing on the computing data. In a possible implementation, the terminal may generate an RDMA packet based on an RDMA protocol stack, determine a first packet based on a wireless communication protocol stack and the RDMA packet, and transmit the first packet to the RDMA server by using the PDU session. In other words, the first packet is obtained based on the RDMA packet. After receiving the first packet, the RDMA server parses out the RDMA packet from the first packet through processing of an L1 protocol stack and/or an L2 protocol stack, and then processes the RDMA packet through an RDMA link layer (optional), an RDMA network layer, and an RDMA transport layer.

For example, when the RDMA protocol stack includes a transport layer, a network layer, and a link layer, for example, a protocol stack architecture is shown in FIG. 7a and FIG. 7b, generating the RDMA packet based on the RDMA protocol stack may include: generating a transport layer packet based on the transport layer in the RDMA protocol stack; generating a network layer packet based on the network layer in the RDMA protocol stack and the transport layer packet; and generating a link layer packet as the RDMA packet based on the link layer in the RDMA protocol stack and the network layer packet.

Alternatively, when the RDMA protocol stack includes a transport layer, generating the RDMA packet based on the RDMA protocol stack may include: generating a transport layer packet based on the transport layer in the RDMA protocol stack; and determining the RDMA packet based on the transport layer packet. When the RDMA protocol stack further includes a network layer, for example, a protocol stack architecture is shown in FIG. 8a and FIG. 8b, determining the RDMA packet based on the transport layer packet may include: generating a network layer packet as the RDMA packet based on the network layer in the RDMA protocol stack and the transport layer packet. When the RDMA protocol stack does not include the network layer, determining the RDMA packet based on the transport layer packet may include: using the transport layer packet as the RDMA packet.

For example, generating the first packet based on the wireless communication protocol stack and the RDMA packet may include: generating the first packet based on an SDAP layer or a PDCP layer in the wireless communication protocol stack and the RDMA packet.

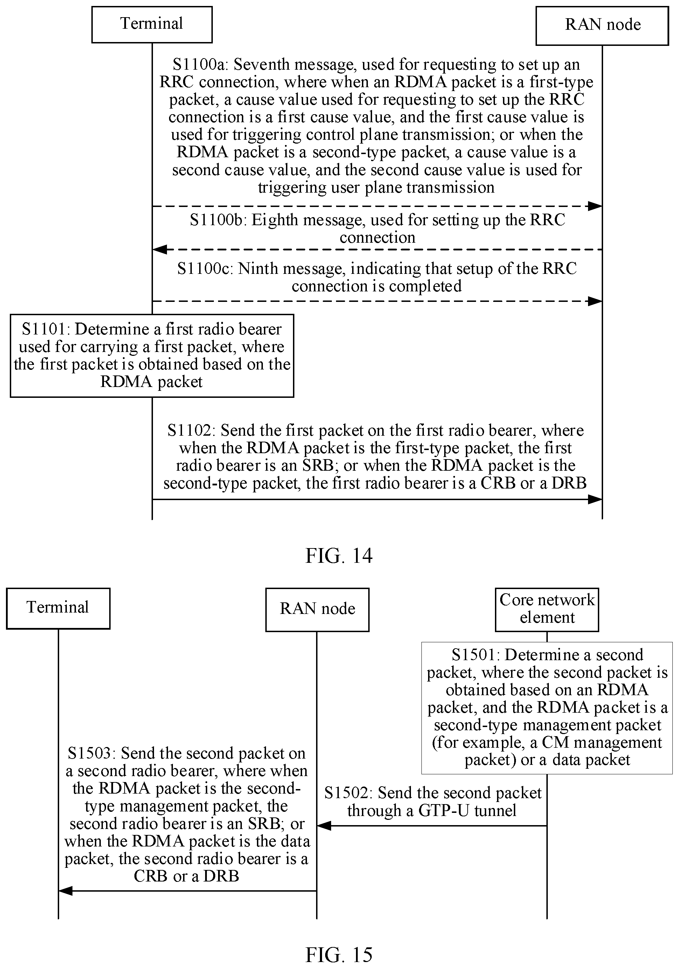

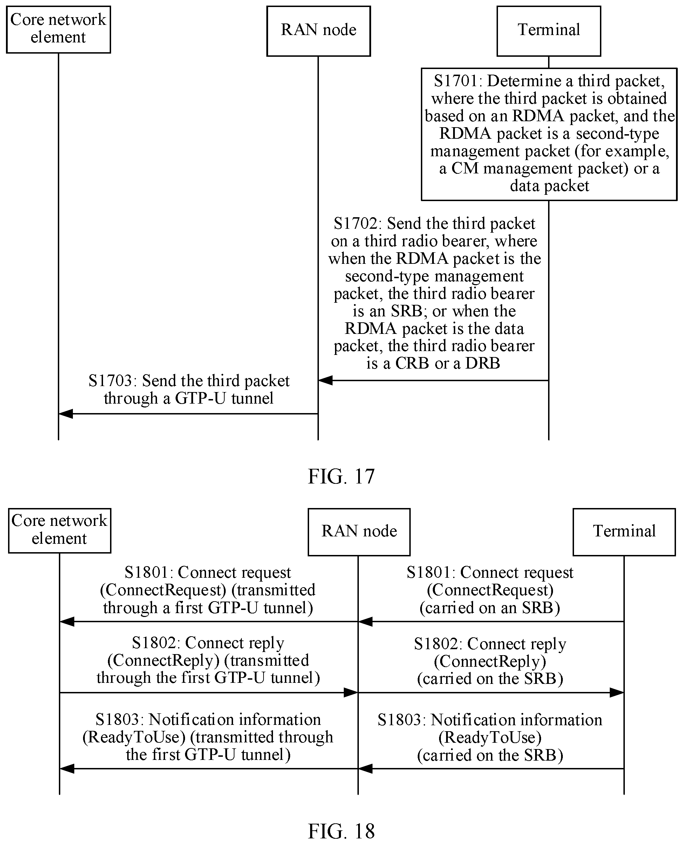

In a possible implementation, two types of GTP-U tunnels may be established between the RAN node and the user plane network element. One type of GTP-U tunnel is used for transmitting the first-type packet, and the other type of GTP-U tunnel is used for transmitting the second-type packet. Alternatively, a same GTP-U tunnel may be reused for the first-type packet and the second-type packet. For details, refer to the following descriptions of the GTP-U tunnels between the RAN node and the user plane network element in a method in FIG. 15 or FIG. 17. Details are not described herein.

In the foregoing solution, both the management packet of RDMA and the data packet of RDMA are transmitted on a user plane by using the PDU session. However, a transmission priority of the management packet (for example, the SM management packet or the CM management packet) is higher than a transmission priority of the data packet, or a transmission priority of the SM management packet is higher than a transmission priority of another packet (for example, the CM management packet or the data packet), so that the SM management packet can be preferentially transmitted, to ensure that RDMA control information can be transmitted to the RDMA node in a timely manner, thereby improving remote memory read performance. In addition, an RDMA technology is used in a wireless communication system, so that CPU utilization of the terminal, the RAN node, or a core network element in a high-rate scenario can be reduced.

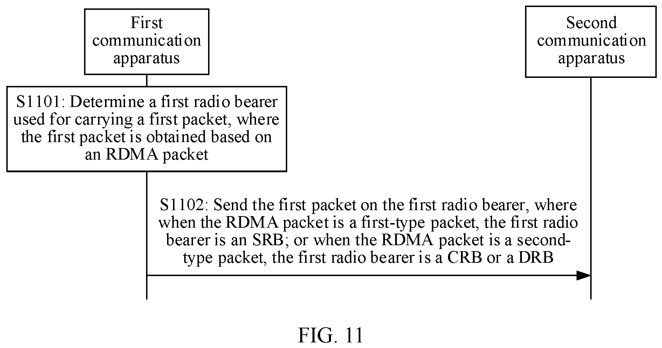

In addition, this application further provides a communication method. In the method, a first-type packet of RDMA is transmitted on a control plane through an air interface, and a second-type packet of RDMA is transmitted on a user plane through the air interface. As shown in FIG. 11, the communication method includes the following steps.

S1101: A first communication apparatus determines a first radio bearer used for carrying a first packet, where the first packet is obtained based on an RDMA packet. The RDMA packet may be a first-type packet or may be a second-type packet.

The first-type packet is a management packet, for example, a management packet of RDMA, for example, an SM management packet, a CM management packet, or an SA management packet. The second-type packet is a data packet. Alternatively, the first-type packet is a first-type management packet, and the first-type management packet is used for subnet management. For example, the first-type management packet is an SM management packet. The second-type packet includes a second-type management packet and/or a data packet. The second-type management packet is another management packet other than the first-type management packet, for example, a management packet (that is, a CM management packet) used for communication management or an SA management packet.

When the RDMA packet used for generating the first packet is the first-type packet, the first radio bearer is a signaling radio bearer (signaling radio bearer, SRB); or when the RDMA packet is the second-type packet, the first radio bearer is a CRB or a DRB.

In other words, management packets such as the SM management packet and the CM management packet are sent on the SRB, and the data packet of RDMA is sent on the CRB or the DRB. Alternatively, the SM management packet is sent on the SRB, and another management packet (for example, the CM management packet) and the data packet are sent on the CRB or the DRB.

Before step S1101, the first communication apparatus further determines the first packet. In a possible implementation, the first communication apparatus may be a terminal. That the first communication apparatus determines the first packet may include: The first communication apparatus generates the first packet. In this case, the terminal may be used as an RDMA node.

In another possible implementation, the first communication apparatus may be a RAN node. That the first communication apparatus determines the first packet may include: The first communication apparatus generates the first packet; or the first communication apparatus receives the first packet from a core network element (for example, a user plane network element); in this case, it may be considered that the first packet is generated by the core network element. In this possible implementation, when the first packet is generated by the RAN node, the RAN node may be understood as an RDMA service provider and is used as an RDMA server, and the terminal may be used as the RDMA node. When the first packet is generated by the core network element, the core network element may be understood as an RDMA service provider and is used as an RDMA server, and the terminal may be used as the RDMA node.

S1102: The first communication apparatus sends the first packet on the first radio bearer. Correspondingly, a second communication apparatus receives the first packet on the first radio bearer.

For example, the first communication apparatus sends the first packet to the second communication apparatus on the first radio bearer. When the first communication apparatus is the terminal, the second communication apparatus may be the RAN node. Further, if a destination of the first packet is the core network element, the RAN node further forwards the first packet to the core network element. When the first communication apparatus is the RAN node, the second communication apparatus may be the terminal. Based on this solution, the SM management packet or the SM management packet, a CM management packet, and other management packets are transmitted on a high-priority control plane (for example, the SRB), and the data packet of RDMA is transmitted on a user plane (for example, the DRB or the CRB), so that a management control message of the RDMA can be preferentially transmitted, to ensure that RDMA control information can be transmitted to the RDMA node in a timely manner, thereby improving remote memory read performance.

In a possible implementation, in step S1101, when the first communication apparatus is the RAN node, the RDMA packet is the first-type management packet, and the first packet is generated by the RAN node, it may be considered that the RAN node has a subnet manager function. When the first communication apparatus is the RAN node, the RDMA packet is the first-type management packet, and the first packet is generated by the core network element, it may be considered that the core network element has a subnet manager function. Alternatively, when the first communication apparatus is the RAN node, the RDMA packet is the CM management packet, and the first packet is generated by the RAN node, it may be considered that the RAN node is used as the RDMA service provider or the RDMA server.

In addition, when the core network element has the subnet manager function, the core network element may send the first-type management packet to the RAN node by using a next generation application protocol (next generation application protocol, NGAP). In this case, the RAN node is used as the RDMA node.

For example, the subnet manager function includes at least one of the following: discovering a physical topology of a subnet, allocating a local identifier (local identifier, LID) of an RDMA node/a switch/a router, establishing a potential path between RDMA nodes, scanning a subnet to discover a topology change, and managing addition and deletion of the RDMA node.

For example, the first-type management packet includes at least one of the following: information (for example, subNGet) used for obtaining or reading a node attribute, information (for example, subNSet) used for setting or writing a node attribute, or response information (for example, subNGetResp) of a read/write request.

For example, the node attribute indicates at least one of the following: node description information, node information, or subnet management information. The node information includes at least one of the following: a version of a management packet, a subnet management version, or a node type (for example, a channel adapter (channel adapter, CA)/switch/router). The subnet management information includes at least one of the following: a global unique identifier (global unique identifier, GUID), a subnet management key, a subnet management status, a priority, or the like.

For example, the GUID may be a global unique identifier of an RDMA device (or the RDMA node). The identifier is allocated by a vendor during device manufacturing, and may be used as an identifier of the RDMA device. The priority may be a priority of a subnet manager. The priority of the subnet manager may be configured by a master (master) subnet manager.

For example, the CM management packet may include at least one of the following: a global identifier (Global Identifier), a transport layer identifier (for example, a QPN, a QPN ID, or a QP index), a key used for RDMA sending, or a key used for RDMA read and/or write. For example, the global identifier is similar to an IP address of an RDMA node in a TCP/IP mechanism, the transport layer identifier indicates a queue pair (queue pair, QP), and a function of the transport layer identifier is similar to a transport layer port number of the TCP/IP.

In a possible implementation, that the terminal, the RAN node, or the core network element generates (or determines) the first packet may include: generating the RDMA packet based on an RDMA protocol stack; and determining the first packet based on a wireless communication protocol stack and the RDMA packet.

In a possible implementation, the RDMA protocol stack includes a transport layer, a network layer, and a link layer. For example, a protocol stack architecture is shown in FIG. 7a and

FIG. 7b. In this case, generating the RDMA packet based on the RDMA protocol stack may include: generating a transport layer packet based on the transport layer in the RDMA protocol stack; generating a network layer packet based on the network layer in the RDMA protocol stack and the transport layer packet; and generating a link layer packet as the RDMA packet based on the link layer in the RDMA protocol stack and the network layer packet.

In this implementation, a type of the RDMA packet may be distinguished by using a link layer identifier of the RDMA packet. For example, when the link layer identifier of the RDMA packet is greater than or equal to a second value, the RDMA packet is the first-type packet; or when the link layer identifier of the RDMA packet is less than a second value, the RDMA packet is the second-type packet. Alternatively, when the link layer identifier of the RDMA packet is less than a second value, the RDMA packet is the first-type packet; or when the link layer identifier of the RDMA packet is greater than or equal to a second value, the RDMA packet is the second-type packet. In this case, the first-type packet corresponds to the first-type management packet, and the second-type packet corresponds to the second-type management packet and/or the data packet.

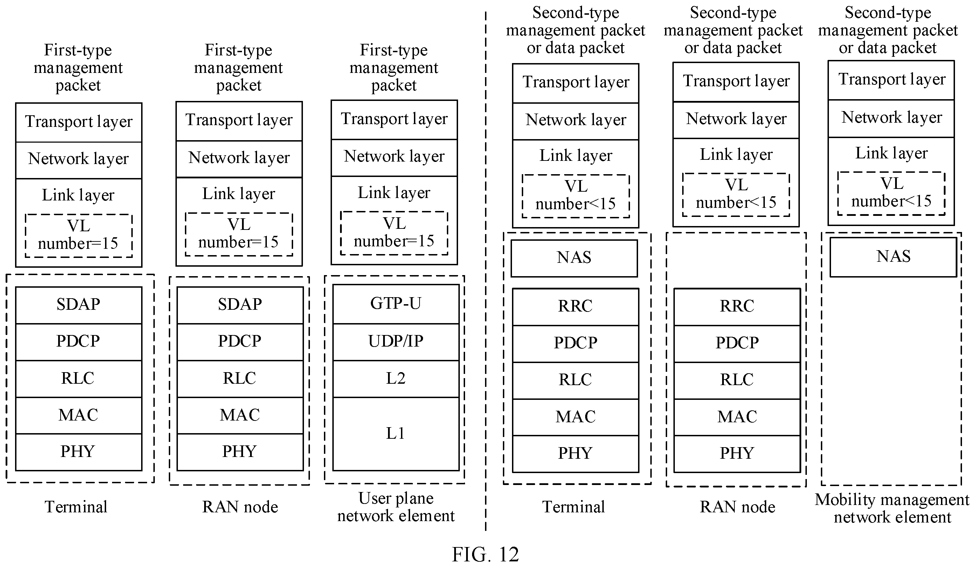

For example, the link layer identifier may also be referred to as a layer 2 identifier. As shown in FIG. 12, the link layer identifier may be, for example, a virtual lane number, and the second value may be 15. To be specific, when the virtual lane number is greater than or equal to 15, the RDMA packet is the first-type management packet; or when the virtual lane number is less than 15, the RDMA packet is the second-type management packet and/or the data packet. Certainly, the link layer identifier may alternatively be another link layer identifier, and the second value may alternatively be another value. This is not specifically limited in this application.

In another possible implementation, the RDMA protocol stack includes a transport layer. In this case, generating the RDMA packet based on the RDMA protocol stack may include: generating a transport layer packet based on the transport layer in the RDMA protocol stack; and determining the RDMA packet based on the transport layer packet.

When the RDMA protocol stack further includes a network layer, for example, a protocol stack architecture is shown in FIG. 8a and FIG. 8b, determining the RDMA packet based on the transport layer packet may include: generating a network layer packet as the RDMA packet based on the network layer in the RDMA protocol stack and the transport layer packet. When the RDMA protocol stack does not include the network layer, determining the RDMA packet based on the transport layer packet may include: using the transport layer packet as the RDMA packet.

In this scenario, the type of the RDMA packet may be distinguished by using a transport layer identifier of the RDMA packet. For example, when the transport layer identifier of the RDMA packet is less than or equal to a first value, the RDMA packet is the first-type packet; or when the transport layer identifier of the RDMA packet is greater than a first value, the RDMA packet is the second-type packet. Alternatively, when the transport layer identifier of the RDMA packet is greater than a first value, the RDMA packet is the first-type packet; or when the transport layer identifier of the RDMA packet is less than or equal to a first value, the RDMA packet is the second-type packet. In this case, the first-type packet corresponds to the management packet of RDMA, and the second-type packet corresponds to a data packet of RDMA.

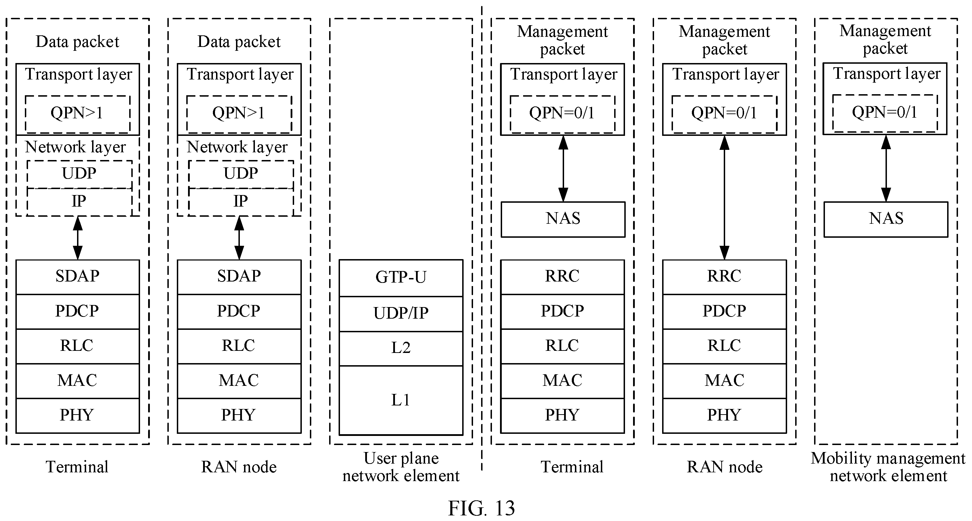

For example, the transport layer identifier may also be referred to as a layer 4 identifier. As shown in FIG. 13, the transport layer identifier may be, for example, a QPN, and the first value may be 1. To be specific, when the QPN is 0 or 1, the RDMA packet is a management packet; or when the QPN is greater than 1, the RDMA packet is a data packet. Certainly, the transport layer identifier may alternatively be another transport layer identifier, and the first value may alternatively be another value. This is not specifically limited in this application.

In a possible implementation, when the RDMA packet is the first-type packet, determining the first packet based on the wireless communication protocol stack and the RDMA packet may include: generating the first packet based on an RRC layer or a NAS stratum in the wireless communication protocol stack and the RDMA packet. In addition, the first packet is carried in an RRC container or a NAS container.

For example, when the first packet is generated by the terminal, and a destination of the first packet is the RAN node, the terminal generates the first packet based on the RRC layer in the wireless communication protocol stack and the RDMA packet, and the first packet is carried in the RRC container. When the first packet is generated by the terminal, and a destination of the first packet is the core network element, the terminal generates the first packet based on the NAS stratum in the wireless communication protocol stack and the RDMA packet, and the first packet is carried in the NAS container.

When the first packet is generated by the RAN node, the RAN node generates the first packet based on the RRC layer in the wireless communication protocol stack and the RDMA packet, and the first packet is carried in the RRC container. When the first packet is generated by the core network element, the core network element generates the first packet based on the NAS stratum in the wireless communication protocol stack and the RDMA packet, and the first packet is carried in the NAS container.

In another possible implementation, when the RDMA packet is the second-type packet, generating the first packet based on the wireless communication protocol stack and the RDMA packet may include: generating the first packet based on an SDAP layer or a PDCP layer in the wireless communication protocol stack and the RDMA packet.

In a possible implementation, when the first communication apparatus is the terminal, as shown in FIG. 14, before step S1102, the method further includes the following step S1100a. Further, the method may further include S1100b and S1100c.

S1100a: The first communication apparatus sends a seventh message to the second communication apparatus. Correspondingly, the second communication apparatus receives the seventh message from the first communication apparatus.

The second communication apparatus is a RAN node. The seventh message is used for requesting to set up an RRC connection. The seventh message includes a cause value for requesting to set up the RRC connection.

When the RDMA packet is the first-type packet, the cause value for requesting to set up the RRC connection is a first cause value, and the first cause value is used for triggering control plane transmission. For example, the first cause value is a mobile terminated response (mt-access), mobile originated signaling access (mo-signaling), or RDMA signaling access.

When the RDMA packet is the second-type packet, the cause value for requesting to set up the RRC connection is a second cause value, and the second cause value is used for triggering user plane transmission. For example, the second cause value is data access (mo-data) or RDMA data access.

For example, the RDMA signaling access or the RDMA data access may be understood as a new cause value provided in this application. Certainly, the RDMA signaling access or the RDMA data access may also have another name. The name is not specifically limited in this application.

The type of the RDMA packet may be distinguished by using the transport layer identifier or the link layer identifier of the RDMA packet. For details, refer to the foregoing related descriptions. Details are not described herein again.

S1100b: The second communication apparatus sends an eighth message to the first communication apparatus. Correspondingly, the first communication apparatus receives the eighth message from the second communication apparatus.

The eighth message is a response message of the seventh message, and the eighth message is used for setting up the RRC connection. For example, the eighth message is an RRC setup (RRCSetup) message.

S1100c: The first communication apparatus sends a ninth message to the second communication apparatus. Correspondingly, the second communication apparatus receives the ninth message from the first communication apparatus.

The ninth message indicates that setup of the RRC connection is completed. For example, the ninth message may be an RRC setup complete (RRCSetupComplete) message.

Optionally, after step S1100c, setup of the RRC connection between the terminal and the RAN node is completed, and the terminal may send the first packet to the RAN node via the first radio bearer.

Based on the foregoing solution, when the RDMA packet is the first-type packet, the terminal includes, in the RRC connection setup request, the first cause value used for triggering control plane transmission; or when the RDMA packet is the second-type packet, the terminal includes, in the RRC connection setup request, the second cause value used for triggering user plane transmission. In this way, when the RDMA packet is the first-type packet, control plane transmission can be performed, and the first-type packet is carried via the SRB. In addition, when the RDMA packet is the second-type packet, user plane transmission can be performed, and the second packet is carried via the CRB or the DRB. Finally, the management control message of RDMA can be preferentially transmitted, to ensure that the RDMA control information can be transmitted to the RDMA node in a timely manner, thereby improving remote memory read performance.

In addition to the foregoing method, this application further provides a communication method. The communication method is used for implementing downlink transmission of a data packet of RDMA and a management packet used for communication management between a core network element (for example, a user plane network element) and a RAN node. As shown in FIG. 15, the communication method includes the following steps.

S1501: The core network element determines a second packet.

The second packet is obtained based on an RDMA packet. The RDMA packet may be a second-type management packet or may be a data packet. The second-type management packet is used for communication management. For example, the second-type management packet is a CM management packet.

Optionally, the core network element may be used as an RDMA service provider, an RDMA server, or an RDMA node. The core network element may be a user plane network element, or may be a network element that can implement a user plane function. For an implementation of obtaining the second packet based on the RDMA packet, refer to the foregoing implementation of determining the first packet based on the RDMA packet. Details are not described herein again.

S1502: The core network element sends the second packet through a GTP-U tunnel. Correspondingly, the RAN node receives the second packet through the GTP-U tunnel.

In a possible implementation, when the RDMA packet used for generating the second packet is the second-type management packet, the GTP-U tunnel is a first GTP-U tunnel; or when the RDMA packet used for generating the second packet is the data packet, the GTP-U tunnel is a second GTP-U tunnel.

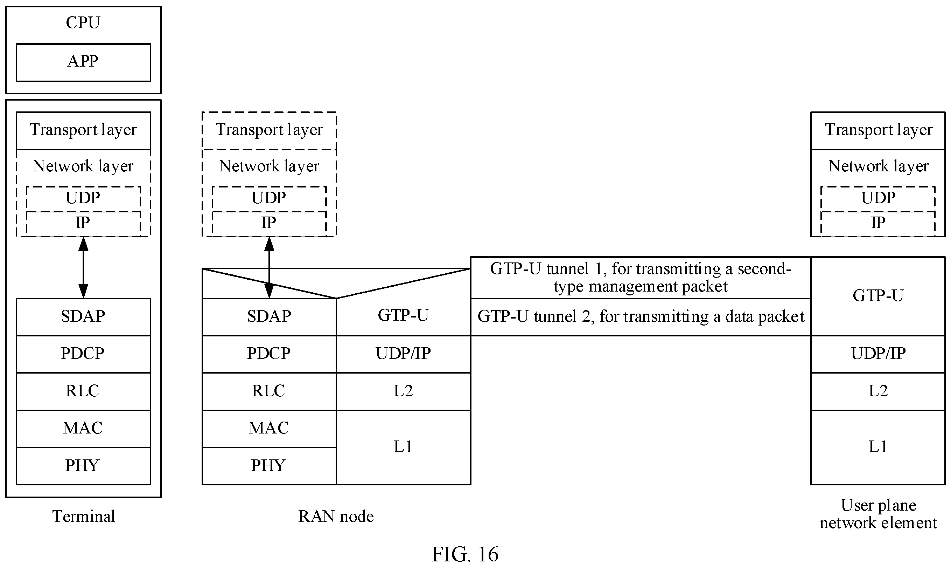

The first GTP-U tunnel is different from the second GTP-U tunnel. That is, two types of GTP-U tunnels, such as a GTP-U tunnel 1 and a GTP-U tunnel 2, are established between the core network element and the RAN node, and are respectively used for transmitting a second-type management packet and a data packet of RDMA, for example, as shown in FIG. 16.

For example, a type of the first GTP-U tunnel is a first type, and a GTP-U tunnel of the first type is used for transmitting a second-type management packet of RDMA. A type of the second GTP-U tunnel is a second type, and a GTP-U tunnel of the second type is used for transmitting a data packet of RDMA.

Alternatively, an identifier of the first GTP-U tunnel corresponds to the second-type management packet, and the first GTP-U tunnel is used for transmitting the second-type management packet of RDMA. An identifier of the second GTP-U tunnel corresponds to the data packet, and the second GTP-U tunnel is used for transmitting the data packet of RDMA.

The core network element may maintain a correspondence between a type of the GTP-U tunnel or an identifier of the GTP-U tunnel and a type of the RDMA packet, so that when a packet is sent, a GTP-U tunnel corresponding to the type of the RDMA packet is selected based on the type of the GTP-U tunnel or the correspondence, to send the packet.

In another possible implementation, regardless of whether the RDMA packet used for generating the second packet is the second-type management packet or the data packet, the core network element sends the second packet through a same GTP-U tunnel. That is, one GTP-U tunnel is reused for the second-type management packet and the data packet of RDMA.

S1503: The RAN node sends the second packet on a second radio bearer. Correspondingly, a terminal sends the second packet on the second radio bearer.

When the RDMA packet used for generating the second packet is the second-type management packet, the second radio bearer is an SRB; or when the RDMA packet is the data packet, the second radio bearer is a CRB or a DRB. In addition, the terminal may be used as an RDMA node.

In a possible implementation, the RAN node may determine, through the GTP-U tunnel for receiving the second packet, whether the RDMA packet used for generating the second packet is the second-type management packet or the data packet. For example, when the GTP-U tunnel is the first GTP-U tunnel, the RDMA packet is the second-type management packet; or when the GTP-U tunnel is the second GTP-U tunnel, the RDMA packet is the data packet.

For example, the RAN node may maintain the correspondence between the type of the GTP-U tunnel or the identifier of the GTP-U tunnel and the type of the RDMA packet, so that after the second packet is received through the GTP-U tunnel, it can be determined, based on the type of the GTP-U tunnel or the type of the RDMA packet corresponding to the GTP-U tunnel, that the RDMA packet used for generating the second packet is the second-type management packet and/or the data packet.

In another possible implementation, when the GTP-U tunnel is reused for the second-type management packet and the data packet, the RAN node may determine, based on a transport layer identifier of the RDMA packet for generating the second packet, whether the RDMA packet is the second-type management packet or the data packet.

For example, when the transport layer identifier of the RDMA packet is less than or equal to a first value, the RDMA packet is the second-type management packet; or when the transport layer identifier of the RDMA packet is greater than a first value, the RDMA packet is the data packet. For example, the transport layer identifier may also be referred to as a layer 4 identifier. The transport layer identifier may be, for example, a QPN, and the first value may be 1. Certainly, the transport layer identifier may alternatively be another transport layer identifier, and the first value may alternatively be another value. This is not specifically limited in this application.

This application further provides a communication method. The communication method is used for implementing uplink transmission of a data packet of RDMA and a management packet used for communication management between a core network element (for example, a user plane network element) and a RAN node. As shown in FIG. 17, the communication method includes the following steps.

S1701: A terminal determines a third packet.

The third packet is obtained based on an RDMA packet. The RDMA packet may be a second-type management packet or may be a data packet. The second-type management packet is used for communication management. For example, the second-type management packet is a CM management packet. For an implementation of obtaining the third packet based on the RDMA packet, refer to the foregoing implementation of determining the first packet based on the RDMA packet. Details are not described herein again.

S1702: The terminal sends the third packet on a third radio bearer. Correspondingly, the RAN node receives the third packet on the third radio bearer.

When the RDMA packet used for generating the third packet is the second-type management packet, the third radio bearer is an SRB; or when the RDMA packet is the data packet, the third radio bearer is a CRB or a DRB.

S1703: The RAN node sends the third packet through a GTP-U tunnel. Correspondingly, the core network element receives the third packet through the GTP-U tunnel.

In a possible implementation, when the RDMA packet used for generating the third packet is the second-type management packet, the GTP-U tunnel is a first GTP-U tunnel; or when the RDMA packet used for generating the third packet is the data packet, the GTP-U tunnel is a second GTP-U tunnel.

The first GTP-U tunnel is different from the second GTP-U tunnel. For details, refer to the foregoing related descriptions in step S1502. Details are not described herein again.

For example, the RAN node may maintain a correspondence between a type of the GTP-U tunnel or an identifier of the GTP-U tunnel and a type of the RDMA packet, so that a GTP-U tunnel corresponding to the type of the RDMA packet is selected based on the type of the GTP-U tunnel or the correspondence, to send the third packet.

In another possible implementation, regardless of whether the RDMA packet used for generating the third packet is the second-type management packet or the data packet, the RAN node sends the third packet through a same GTP-U tunnel. That is, one GTP-U tunnel is reused for the second-type management packet and the data packet of RDMA.

Optionally, the RAN node may determine, based on a transport layer identifier of the RDMA packet for generating the third packet, whether the RDMA packet is the second-type management packet or the data packet. For example, when the transport layer identifier of the RDMA packet is less than or equal to a first value, the RDMA packet is the second-type management packet; or when the transport layer identifier of the RDMA packet is greater than a first value, the RDMA packet is the data packet. For details, refer to the foregoing related descriptions in step S1503. Details are not described herein again.

Based on the foregoing solution, a CM management packet is transmitted on a high-priority control plane (for example, an SRB), and a data packet of RDMA is transmitted on a user plane (for example, a DRB or an SRB), so that a CM control message of RDMA can be preferentially transmitted, to ensure that RDMA control information can be transmitted to the RDMA node in a timely manner, thereby improving remote memory read performance. In addition, GTP-U tunnels used for transmitting the CM management packet and the data packet may be separately established between the RAN node and the core network element, so that different GTP-U tunnels can be used for transmitting the CM management packet and the data packet. Alternatively, a GTP-U tunnel between the RAN node and the core network element may be reused for the CM management packet and the data packet, thereby reducing complexity and overheads of establishing a tunnel between the RAN node and the core network element.

In a possible implementation, the method shown in FIG. 15 or FIG. 17 may be applied to an RDMA CM handshake-based link establishment procedure between the terminal and the core network element. In the handshake-based link establishment procedure, the terminal and the core network element may exchange a QPC. For example, when GTP-U tunnels used for transmitting the second-type management packet and the data packet are separately established between the RAN node and the core network element, as shown in FIG. 18, a three-way handshake-based link establishment procedure includes the following steps.

S1801: A terminal sends a connect request (ConnectRequest) to a RAN node. Correspondingly, the RAN node receives the connect request from the terminal, and sends the connect request to a core network element. The core network element receives the connect request.

The connect request sent by the terminal to the RAN node may be carried on an SRB. The RAN node may send the connect request to the core network element through a first GTP-U tunnel.

S1802: The core network element sends a connect reply (ConnectReply) to the RAN node. Correspondingly, the RAN node receives the connect reply from the core network element, and sends the connect reply to the terminal.

The core network element may send the connect reply to the RAN node through the first GTP-U tunnel. The RAN node may map the connect reply to the SRB and send the connect reply to the terminal.

For example, the connect reply may include at least one of the following: a global identifier (Global Identifier), a transport layer identifier (for example, a QPN, a QPN ID, or a QP index), a key used for RDMA sending, or a key used for RDMA read and/or write.

S1803: The terminal sends notification information to the RAN node. Correspondingly, the RAN node receives the notification information from the terminal, and sends the notification information to the core network element. The core network element receives the notification information.

The notification information may be, for example, ready to use (ReadyToUse). The notification information may indicate that a parameter carried in the connect reply is agreed on.

Optionally, after step S1803, the terminal may exchange data with the core network element. During data exchange, a data packet of RDMA is carried on a CRB or a DRB through an air interface, and is transmitted between the RAN node and the core network element through a second GTP-U tunnel.

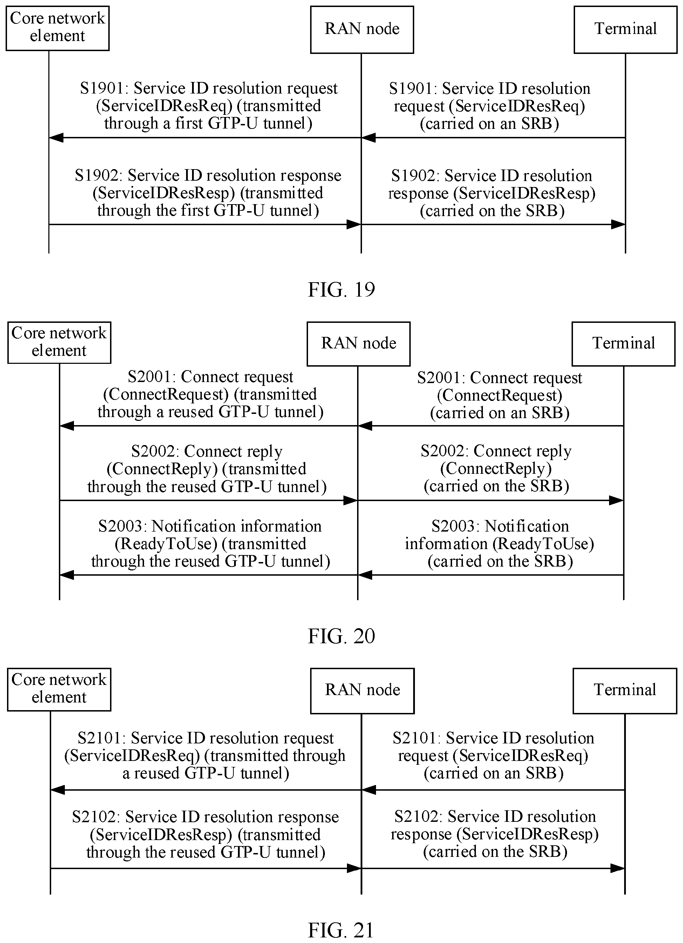

For example, when GTP-U tunnels used for transmitting the second-type management packet and the data packet are separately established between the RAN node and the core network element, as shown in FIG. 19, a two-way handshake-based link establishment procedure includes the following steps.

S1901: A terminal sends a service ID resolution request (Service ID Resolution Request) to a RAN node. Correspondingly, the RAN node receives the service ID resolution request from the terminal, and sends the service ID request to the core network element. The core network element receives the service ID resolution request.

The service ID resolution request sent by the terminal to the RAN node may be carried on an SRB. The RAN node may send the service ID resolution request to the core network element through a first GTP-U tunnel.

S1902: The core network element sends a service ID resolution response (Service ID Resolution Response) to the RAN node. Correspondingly, the RAN node receives the service ID resolution response from the core network element, and sends the service ID resolution response to the terminal.

The core network element may send the service ID resolution response to the RAN node through the first GTP-U tunnel. The RAN node may map the connection service ID resolution response to the SRB and send the service ID resolution response to the terminal.

For example, the service ID resolution response may include at least one of the following: a global identifier (Global Identifier), a transport layer identifier (for example, a QPN, a QPN ID, or a QP index), a key used for RDMA sending, or a key used for RDMA read and/or write.

Optionally, after step S1902, the terminal may exchange data with the core network element. During data exchange, a data packet of RDMA is carried on a CRB or a DRB through an air interface, and is transmitted between the RAN node and the core network element through a second GTP-U tunnel.

For example, as shown in FIG. 20, when a GTP-U tunnel is reused for the second-type management packet and the data packet, a three-way handshake-based link establishment procedure is similar to that in FIG. 18, and a difference lies in that transmission between the RAN node and the core network element is performed through the GTP-U tunnel that is reused for the second-type management packet and the data packet. Similarly, as shown in FIG. 21, a two-way handshake-based establishment procedure is similar to that in FIG. 19, and a difference lies in that transmission between the RAN node and the core network element is performed through the GTP-U tunnel that is reused for the second-type management packet and the data packet.

In a possible implementation, when the RAN node is used as an RDMA service provider, an RDMA server, or an RDMA node, in the methods shown in FIG. 15 to FIG. 21, interaction between the RAN node and the core network device may not be performed, and interaction between the terminal and the RAN node is still applicable.

The foregoing describes the methods provided in this application. In addition, this application further provides a communication apparatus to implement the functions described in the foregoing method embodiments.

It may be understood that, to implement the foregoing functions, the communication apparatus includes a hardware structure and/or a software module for performing a corresponding function. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, each functional module may be obtained through division based on each corresponding function, or two or more functions may be integrated into one processing module. The integrated module may be implemented in the form of hardware, or may be implemented in a form of a software functional module. It should be noted that, in embodiments of this application, module division is an example, and is merely a logical function division. In actual implementation, another division manner may be used.

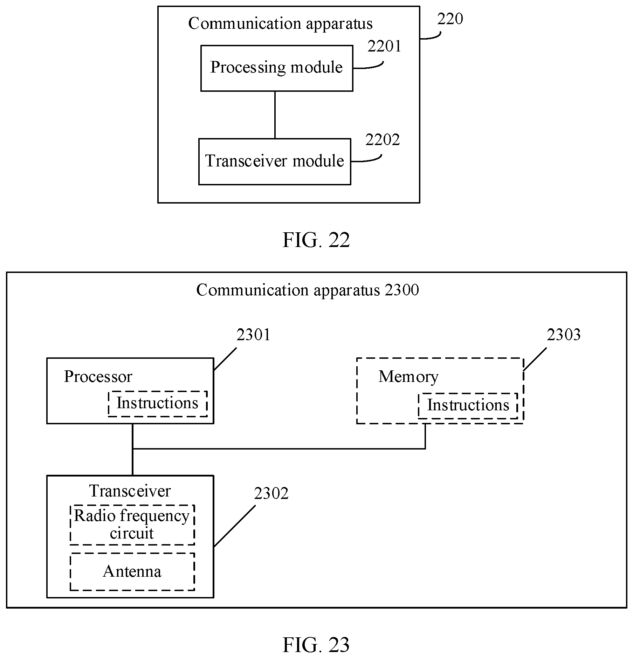

FIG. 22 is a diagram of a structure of a communication apparatus 220. The communication apparatus 220 includes a processing module 2201 and a transceiver module 2202. The communication apparatus 220 may be configured to implement functions of the foregoing terminal, RAN node, or core network element.

In some embodiments, the communication apparatus 220 may further include a storage module (not shown in FIG. 22), configured to store program instructions and data.

In some embodiments, the transceiver module 2202 may also be referred to as a transceiver unit, and is configured to implement a sending function and/or a receiving function. The transceiver module 2202 may include a transceiver circuit, a transceiver machine, a transceiver, or a communication interface.

In some embodiments, the transceiver module 2202 may include a receiving module and a sending module, which are respectively configured to perform receiving and sending steps performed by the terminal, the RAN node, or the core network element in the foregoing method embodiments, and/or configured to support another process of the technology described in this specification. The processing module 2201 may be configured to perform processing steps performed by the terminal, the RAN node, or the core network element in the foregoing method embodiments, and/or configured to support another process of the technology described in this specification.

When the communication apparatus 220 is configured to implement the functions of the terminal:
The transceiver module 2202 is configured to send a first message, where the first message is used for requesting to establish a protocol data unit PDU session, and the PDU session is used for transmitting a remote direct memory access RDMA packet. The transceiver module 2202 is further configured to receive a second message, where the second message indicates that establishment of the PDU session is accepted. The first message includes first information, the first information indicates a type of the RDMA packet transmitted in the PDU session, the type of the RDMA packet includes a first-type packet and a second-type packet, and a transmission priority of the first-type packet is higher than a transmission priority of the second-type packet. The first-type packet is a management packet, and the second-type packet is a data packet; or the first-type packet is a first-type management packet, the second-type packet includes a second-type management packet and/or a data packet, and the first-type management packet is used for subnet management.

When the communication apparatus 220 is configured to implement the functions of the RAN node, in a possible implementation:
The transceiver module 2202 is configured to receive a first message, where the first message is used for requesting to establish a protocol data unit PDU session, and the PDU session is used for transmitting a remote direct memory access RDMA packet. The transceiver module 2202 is further configured to send a second message, where the second message indicates that establishment of the PDU session is accepted. The first message includes first information, the first information indicates a type of the RDMA packet transmitted in the PDU session, the type of the RDMA packet includes a first-type packet and a second-type packet, and a transmission priority of the first-type packet is higher than a transmission priority of the second-type packet. The first-type packet is a management packet, and the second-type packet is a data packet; or the first-type packet is a first-type management packet, the second-type packet includes a second-type management packet and/or a data packet, and the first-type management packet is used for subnet management.

In another possible implementation:
The transceiver module 2202 is configured to receive a first packet through a general packet radio service tunnelling protocol for user plane GTP-U tunnel, where the first packet is obtained based on a remote direct memory access RDMA packet. The transceiver module 2202 is further configured to send the first packet on a first radio bearer. When the RDMA packet is a first-type management packet, the first radio bearer is a signaling radio bearer SRB, and the first-type management packet is used for communication management; or when the RDMA packet is a data packet, the first radio bearer is a computing radio bearer CRB or a data radio bearer DRB.

In still another possible implementation:
The transceiver module 2202 is configured to receive a first packet on a first radio bearer, where the first packet is obtained based on a remote direct memory access RDMA packet. The transceiver module 2202 is further configured to send the first packet through a general packet radio service tunnelling protocol for user plane GTP-U tunnel. When the RDMA packet is a first-type management packet, the first radio bearer is a signaling radio bearer SRB, and the first-type management packet is used for communication management; or when the RDMA packet is a data packet, the first radio bearer is a computing radio bearer CRB or a data radio bearer DRB.

When the communication apparatus 220 is configured to implement functions of a first communication apparatus, and the first communication apparatus is a terminal or a RAN node:
The processing module 2201 is configured to determine a first radio bearer used for carrying a first packet, where the first packet is obtained based on a remote direct memory access RDMA packet. The transceiver module 2202 is configured to send the first packet on the first radio bearer. When the RDMA packet is a first-type packet, the first radio bearer is a signaling radio bearer SRB; or when the RDMA packet is a second-type packet, the first radio bearer is a computing radio bearer CRB or a data radio bearer DRB. The first-type packet is a management packet, and the second-type packet is a data packet; or the first-type packet is a first-type management packet, the second-type packet includes a second-type management packet and/or a data packet, and the first-type management packet is used for subnet management.

Optionally, the processing module 2201 is further configured to generate the RDMA packet based on an RDMA protocol stack. The processing module 2201 is further configured to determine the first packet based on a wireless communication protocol stack and the RDMA packet.

Optionally, the RDMA protocol stack includes a transport layer, a network layer, and a link layer. That the processing module 2201 is configured to generate the RDMA packet based on the RDMA protocol stack includes: The processing module 2201 is configured to generate a transport layer packet based on the transport layer in the RDMA protocol stack; the processing module 2201 is further configured to generate a network layer packet based on the network layer in the RDMA protocol stack and the transport layer packet; and the processing module 2201 is further configured to generate a link layer packet as the RDMA packet based on the link layer in the RDMA protocol stack and the network layer packet.

Optionally, the RDMA protocol stack includes a transport layer. That the processing module 2201 is configured to generate the RDMA packet based on the RDMA protocol stack includes: The processing module 2201 is configured to generate a transport layer packet based on the transport layer in the RDMA protocol stack; and the processing module 2201 is further configured to determine the RDMA packet based on the transport layer packet.

Optionally, that the processing module 2201 is configured to determine the RDMA packet based on the transport layer packet includes: The processing module 2201 is configured to use the transport layer packet as the RDMA packet; or the processing module 2201 is configured to generate a network layer packet as the RDMA packet based on a network layer in the RDMA protocol stack and the transport layer packet.

Optionally, the transceiver module 2202 is further configured to send a first message, where the first message is used for requesting to set up an RRC connection, and the first message includes a cause value for requesting to set up the RRC connection. When the RDMA packet is the first-type packet, the cause value is a first cause value, and the first cause value is used for triggering control plane transmission; or when the RDMA packet is the second-type packet, the cause value is a second cause value, and the second cause value is used for triggering user plane transmission.

When the communication apparatus 220 is configured to implement the functions of the core network element, in a possible implementation:
The processing module 2201 is configured to determine a first packet, where the first packet is obtained based on a remote direct memory access RDMA packet; and the transceiver module 2202 is configured to send the first packet through a general packet radio service tunnelling protocol for user plane GTP-U tunnel. When the RDMA packet is a first-type management packet, the GTP-U tunnel is a first GTP-U tunnel, and the first-type management packet is used for communication management; or when the RDMA packet is a data packet, the GTP-U tunnel is a second GTP-U tunnel.

In another possible implementation:
The transceiver module 2202 is configured to receive a first packet through a general packet radio service tunnelling protocol for user plane GTP-U tunnel, where the first packet is obtained based on a remote direct memory access RDMA packet. When the RDMA packet is a first-type management packet, the GTP-U tunnel is a first GTP-U tunnel, and the first-type management packet is used for communication management; or when the RDMA packet is a data packet, the GTP-U tunnel is a second GTP-U tunnel.

All related content of the steps in the foregoing method embodiments may be cited in function descriptions of the corresponding functional modules. Details are not described herein again.

In this application, the communication apparatus 220 may be presented in a form of functional modules obtained through division in an integrated manner. The "module" herein may be an application-specific integrated circuit (application-specific integrated circuit, ASIC), a circuit, a processor that executes one or more software or firmware programs, a memory, an integrated logic circuit, and/or another component that can provide the foregoing functions.

In some embodiments, when the communication apparatus 220 in FIG. 22 is a chip or a chip system, a function/an implementation process of the transceiver module 2202 may be implemented through an input/output interface (or a communication interface) of the chip or the chip system, and a function/an implementation process of the processing module 2201 may be implemented through a processor (or a processing circuit) of the chip or the chip system.

The communication apparatus 220 provided in this embodiment can perform the foregoing method. Therefore, for technical effects that can be achieved by the communication apparatus 220, refer to the foregoing method embodiments. Details are not described herein again.

In a possible product form, the terminal, the RAN node, or the core network element in embodiments of this application may be implemented by using the following: one or more field programmable gate arrays (field programmable gate array, FPGA), a programmable logic device (programmable logic device, PLD), a controller, a state machine, gate logic, a discrete hardware component, any other suitable circuit, or any combination of circuits that can perform various functions described throughout this application.

In another possible product form, the terminal or the RAN node in embodiments of this application may be implemented by using a general bus architecture. For ease of description, FIG. 23 is a diagram of a structure of a communication apparatus 2300 according to an embodiment of this application. The communication apparatus 2300 includes a processor 2301 and a transceiver 2302. The communication apparatus 2300 may be a terminal, or a chip or a chip system in the terminal. Alternatively, the communication apparatus 2300 may be a RAN node, or a chip or a module in the RAN node. FIG. 23 shows only main components in the communication apparatus 2300. In addition to the processor 2301 and the transceiver 2302, the communication apparatus may further include a memory 2303 and an input/output apparatus (not shown in the figure).

Optionally, the processor 2301 is mainly configured to: process a communication protocol and communication data, control the entire communication apparatus, execute a software program, and process data of the software program, to implement the methods provided in the foregoing method embodiments. The memory 2303 is mainly configured to store the software program and data. The transceiver 2302 may include a radio frequency circuit and an antenna. The radio frequency circuit is mainly configured to perform conversion between a baseband signal and a radio frequency signal, and process the radio frequency signal. The antenna is mainly configured to receive a radio frequency signal in a form of an electromagnetic wave and send a radio frequency signal in a form of an electromagnetic wave. The input/output apparatus, for example, a touchscreen, a display, or a keyboard, is mainly configured to: receive data input by a user and output data to the user.

Optionally, the processor 2301, the transceiver 2302, and the memory 2303 may be connected through a communication bus.

After the communication apparatus is powered on, the processor 2301 may read the software program in the memory 2303, interpret and execute instructions of the software program, and process data of the software program. When data needs to be sent wirelessly, the processor 2301 performs baseband processing on to-be-sent data, and then outputs a baseband signal to the radio frequency circuit. The radio frequency circuit performs radio frequency processing on the baseband signal, and then sends a radio frequency signal in an electromagnetic wave form via the antenna. When data is sent to the communication apparatus, the radio frequency circuit receives a radio frequency signal via the antenna, converts the radio frequency signal into a baseband signal, and outputs the baseband signal to the processor 2301. The processor 2301 converts the baseband signal into data and processes the data.

In another implementation, the radio frequency circuit and the antenna may be disposed independent of the processor that performs baseband processing. For example, in a distributed scenario, the radio frequency circuit and the antenna may be disposed remotely and independent of the communication apparatus.

In some embodiments, in hardware implementation, a person skilled in the art may figure out that the communication apparatus 220 may be in a form of the communication apparatus 2300 shown in FIG. 23.

In an example, the function/implementation process of the processing module 2201 in FIG. 22 may be implemented by the processor 2301 in the communication apparatus 2300 shown in FIG. 23 by invoking computer-executable instructions stored in the memory 2303. The function/implementation process of the transceiver module 2202 in FIG. 22 may be implemented by the transceiver 2302 in the communication apparatus 2300 shown in FIG. 23.

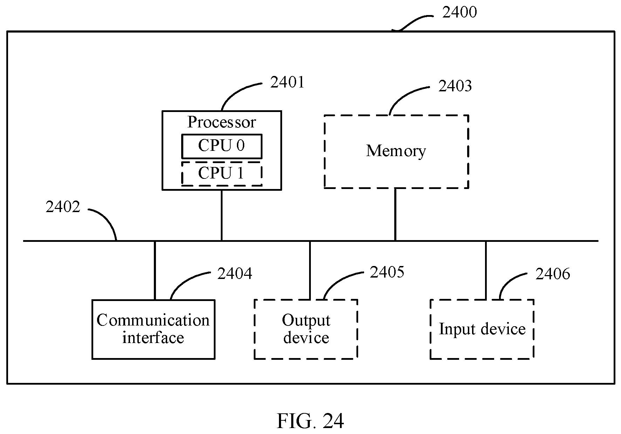

In still another possible product form, the terminal, the RAN node, or the core network element in this application may use a composition structure shown in FIG. 24, or include components shown in FIG. 24. FIG. 24 is a schematic composition diagram of a communication apparatus 2400 according to this application. The communication apparatus 2400 may be a terminal, or a chip or a system on chip in the terminal; may be a RAN node, or a module, a chip, or a system on chip in the RAN node; or may be a core network element, or a module, a chip, or a system on chip in the core network element.

As shown in FIG. 24, the communication apparatus 2400 includes at least one processor 2401 and at least one communication interface (in FIG. 24, only an example in which one communication interface 2404 and one processor 2401 are included is used for description). Optionally, the communication apparatus 2400 may further include a communication bus 2402 and a memory 2403.

The processor 2401 may be a general-purpose central processing unit (central processing unit, CPU), a general-purpose processor, a network processor (network processor, NP), a digital signal processor (digital signal processor, DSP), a microprocessor, a microcontroller, a PLD, or any combination thereof. Alternatively, the processor 2401 may be another apparatus having a processing function, for example, a circuit, a component, or a software module. This is not limited.

The communication bus 2402 is configured to connect different components in the communication apparatus 2400, so that the different components can communicate with each other. The communication bus 2402 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one bold line is used for representing the bus in FIG. 24, but this does not mean that there is only one bus or only one type of bus.

The communication interface 2404 is configured to communicate with another device or a communication network. For example, the communication interface 2404 may be a module, a circuit, a transceiver, or any apparatus that can implement communication. Optionally, the communication interface 2404 may alternatively be an input/output interface located in the processor 2401, and is configured to implement a signal input and a signal output of the processor.

The memory 2403 may be an apparatus having a storage function, and is configured to store instructions and/or data. The instructions may be computer programs.

For example, the memory 2403 may be a read-only memory (read-only memory, ROM) or another type of static storage device that can store static information and/or instructions; may be a random access memory (random access memory, RAM) or another type of dynamic storage device that can store information and/or instructions; or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or the like. This is not limited.

It should be noted that the memory 2403 may be independent of the processor 2401, or may be integrated with the processor 2401. The memory 2403 may be located inside the communication apparatus 2400, or may be located outside the communication apparatus 2400. This is not limited. The processor 2401 may be configured to execute the instructions stored in the memory 2403, to implement a method provided in the following embodiments of this application.

In an optional implementation, the communication apparatus 2400 may further include an output device 2405 and an input device 2406. The output device 2405 communicates with the processor 2401, and may display information in a plurality of manners. For example, the output device 2405 may be a liquid crystal display (liquid crystal display, LCD), a light emitting diode (light emitting diode, LED) display device, a cathode ray tube (cathode ray tube, CRT) display device, a projector (projector), or the like. The input device 2406 communicates with the processor 2401, and may receive an input of a user in a plurality of manners. For example, the input device 2406 may be a mouse, a keyboard, a touchscreen device, or a sensor device.

In some embodiments, in hardware implementation, a person skilled in the art may figure out that the communication apparatus 220 shown in FIG. 22 may be in a form of the communication apparatus 2400 shown in FIG. 24.

In an example, the function/implementation process of the processing module 2201 in FIG. 22 may be implemented by the processor 2401 in the communication apparatus 2400 shown in FIG. 24 by invoking computer-executable instructions stored in the memory 2403. The function/implementation process of the transceiver module 2202 in FIG. 22 may be implemented by the communication interface 2404 in the communication apparatus 2400 shown in FIG. 24.

It should be noted that the structure shown in FIG. 24 does not constitute a specific limitation on the terminal or the RAN node. For example, in some other embodiments of this application, the terminal or the RAN node may include more or fewer components than those shown in the figure, some components may be combined, some components may be split, or different component arrangements may be used. The components shown in the figure may be implemented by hardware, software, or a combination of software and hardware.

In some embodiments, an embodiment of this application further provides a communication apparatus. The communication apparatus includes a processor, configured to implement the method in any one of the foregoing method embodiments.

In a possible implementation, the communication apparatus further includes a memory. The memory is configured to store a necessary computer program and data. The computer program may include instructions. The processor may invoke instructions in the computer program stored in the memory, to instruct the communication apparatus to perform the method in any foregoing method embodiments. Certainly, the communication apparatus may not include a memory.

In another possible implementation, the communication apparatus further includes an interface circuit. The interface circuit is a code/data read/write interface circuit, and the interface circuit is configured to receive computer-executable instructions (where the computer-executable instructions are stored in a memory, and may be directly read from the memory, or may be read via another component) and send the computer-executable instructions to the processor.

In still another possible implementation, the communication apparatus further includes a communication interface, and the communication interface is configured to communicate with a module other than the communication apparatus.

It may be understood that the communication apparatus may be a chip or a chip system. When the communication apparatus is the chip system, the communication apparatus may include a chip, or may include a chip and another discrete component. This is not specifically limited in embodiments of this application.

This application further provides a computer-readable storage medium. The computer-readable storage medium stores a computer program or instructions. When the computer program or instructions are executed by a computer, functions in any foregoing method embodiments are implemented.

This application further provides a computer program product. When the computer program product is executed by a computer, functions in any one of the foregoing method embodiments are implemented.

A person of ordinary skill in the art may understand that, for the purpose of convenient and brief description, for a detailed working process of the foregoing system, apparatuses, and units, refer to a corresponding process in the foregoing method embodiment. Details are not described herein again.

It may be understood that the system, apparatuses, and methods described in this application may alternatively be implemented in another manner. For example, the described apparatus embodiments are merely examples. For example, division into units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate components may be physically separated or not, this is, may be located together in one place or distributed on a plurality of network units. Components displayed as units may be or may be not physical units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

All or some of the foregoing embodiments may be implemented by using software, hardware, firmware, or any combination thereof. When a software program is used for implementing embodiments, embodiments may be implemented completely or partially in a form of a computer program product. The computer program product includes one or more computer instructions. When computer program instructions are loaded and executed on a computer, all or some of the procedures or functions according to embodiments of this application are generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (solid-state drive, SSD)), or the like. In embodiments of this application, the computer may include the foregoing apparatuses.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not indicate that these measures cannot be combined to produce a better effect.

Although this application is described with reference to specific features and embodiments thereof, it is clear that various modifications and combinations may be made without departing from the scope of this application. Correspondingly, the specification and accompanying drawings are merely example descriptions of this application defined by the appended claims, and are considered as any of or all modifications, variations, combinations or equivalents that cover the scope of this application. It is clear that a person skilled in the art can make various modifications and variations to this application without departing from the scope of this application. In this way, this application is intended to cover these modifications and variations of this application provided that they fall within the scope of the claims of this application and their equivalent technologies.

## Claims

1. A remote direct memory access-based communication method, wherein the method comprises:
sending a first message, wherein the first message is used for requesting to establish a protocol data unit PDU session, the PDU session is used for transmitting a remote direct memory access RDMA packet, the first message comprises first information, the first information indicates a type of the RDMA packet transmitted in the PDU session, the type of the RDMA packet comprises a first-type packet and a second-type packet, and a transmission priority of the first-type packet is higher than a transmission priority of the second-type packet, wherein the first-type packet is a management packet, and the second-type packet is a data packet; or the first-type packet is a first-type management packet, the second-type packet comprises a second-type management packet and/or a data packet, and the first-type management packet is used for subnet management; and
receiving a second message, wherein the second message indicates that establishment of the PDU session is accepted.

2. A remote direct memory access-based communication method, wherein the method comprises:
receiving a first message, wherein the first message is used for requesting to establish a protocol data unit PDU session, the PDU session is used for transmitting a remote direct memory access RDMA packet, the first message comprises first information, the first information indicates a type of the RDMA packet transmitted in the PDU session, the type of the RDMA packet comprises a first-type packet and a second-type packet, and a transmission priority of the first-type packet is higher than a transmission priority of the second-type packet, wherein the first-type packet is a management packet, and the second-type packet is a data packet; or the first-type packet is a first-type management packet, the second-type packet comprises a second-type management packet and/or a data packet, and the first-type management packet is used for subnet management; and
sending a second message, wherein the second message indicates that establishment of the PDU session is accepted.

3. The method according to claim 1 or 2, wherein
the first-type packet is transmitted by using a first-type quality of service QoS flow of the PDU session, the second-type packet is transmitted by using a second-type QoS flow of the PDU session, and a priority of the first-type QoS flow is higher than a priority of the second-type QoS flow.

4. The method according to any one of claims 1 to 3, wherein the first message further comprises second information, and the second information indicates that a type of the PDU session is an RDMA session.

5. The method according to any one of claims 1 to 4, wherein the first information comprises a transport layer identifier of the RDMA packet; and
when the transport layer identifier is less than or equal to a first value, the type of the RDMA packet transmitted in the PDU session is the management packet; or
when the transport layer identifier is greater than a first value, the type of the RDMA packet transmitted in the PDU session is the data packet.

6. The method according to any one of claims 1 to 4, wherein the first information comprises a link layer identifier of the RDMA packet; and
when the link layer identifier is greater than or equal to a second value, the type of the RDMA packet transmitted in the PDU session is the first-type management packet; or
when the link layer identifier is less than a second value, the type of the RDMA packet transmitted in the PDU session is the second-type management packet and/or the data packet.

7. A remote direct memory access-based communication method, wherein the method comprises:
determining a first radio bearer used for carrying a first packet, wherein the first packet is obtained based on a remote direct memory access RDMA packet; and
sending the first packet on the first radio bearer, wherein when the RDMA packet is a first-type packet, the first radio bearer is a signaling radio bearer SRB, or when the RDMA packet is a second-type packet, the first radio bearer is a computing radio bearer CRB or a data radio bearer DRB, wherein the first-type packet is a management packet, and the second-type packet is a data packet; or the first-type packet is a first-type management packet, the second-type packet comprises a second-type management packet and/or a data packet, and the first-type management packet is used for subnet management.

8. The method according to claim 7, wherein the method further comprises:
generating the RDMA packet based on an RDMA protocol stack; and
determining the first packet based on a wireless communication protocol stack and the RDMA packet.

9. The method according to claim 8, wherein the RDMA protocol stack comprises a transport layer, a network layer, and a link layer; and the generating the RDMA packet based on the RDMA protocol stack comprises:
generating a transport layer packet based on the transport layer in the RDMA protocol stack;
generating a network layer packet based on the network layer in the RDMA protocol stack and the transport layer packet; and
generating a link layer packet as the RDMA packet based on the link layer in the RDMA protocol stack and the network layer packet.

10. The method according to any one of claims 7 to 9, wherein when a link layer identifier of the RDMA packet is greater than or equal to a second value, the RDMA packet is the first-type management packet; or
when a link layer identifier of the RDMA packet is less than a second value, the RDMA packet is the second-type management packet and/or the data packet.

11. The method according to claim 8, wherein the RDMA protocol stack comprises a transport layer, and the generating the RDMA packet based on the RDMA protocol stack comprises:
generating a transport layer packet based on the transport layer in the RDMA protocol stack; and
determining the RDMA packet based on the transport layer packet.

12. The method according to claim 11, wherein the determining the RDMA packet based on the transport layer packet comprises:
using the transport layer packet as the RDMA packet; or
generating a network layer packet as the RDMA packet based on a network layer in the RDMA protocol stack and the transport layer packet.

13. The method according to any one of claims 7, 8, 11, or 12, wherein
when a transport layer identifier of the RDMA packet is less than or equal to a first value, the RDMA packet is the management packet; or
when a transport layer identifier of the RDMA packet is greater than a first value, the RDMA packet is the data packet.

14. The method according to any one of claims 7 to 13, wherein when the RDMA packet is the first-type packet, the first packet is carried in a radio resource control RRC container or a non-access stratum NAS container.

15. The method according to any one of claims 7 to 14, wherein the method further comprises:
sending a first message, wherein the first message is used for requesting to set up an RRC connection, and the first message comprises a cause value for requesting to set up the RRC connection, wherein
when the RDMA packet is the first-type packet, the cause value is a first cause value, and the first cause value is used for triggering control plane transmission; or when the RDMA packet is the second-type packet, the cause value is a second cause value, and the second cause value is used for triggering user plane transmission.

16. The method according to claim 15, wherein
the first cause value is at least one of a mobile terminated response, mobile originated signaling access, or RDMA signaling access, and/or the second cause value is data access or RDMA data access.

17. A remote direct memory access-based communication method, wherein the method comprises:
receiving a first packet through a general packet radio service tunnelling protocol for user plane GTP-U tunnel, wherein the first packet is obtained based on a remote direct memory access RDMA packet; and
sending the first packet on a first radio bearer, wherein when the RDMA packet is a first-type management packet, the first radio bearer is a signaling radio bearer SRB, and the first-type management packet is used for communication management; or when the RDMA packet is a data packet, the first radio bearer is a computing radio bearer CRB or a data radio bearer DRB.

18. The method according to claim 17, wherein
when the GTP-U tunnel is a first GTP-U tunnel, the RDMA packet is the first-type management packet; or
when the GTP-U tunnel is a second GTP-U tunnel, the RDMA packet is the data packet.

19. The method according to claim 17, wherein
when a transport layer identifier of the RDMA packet is less than or equal to a first value, the RDMA packet is the first-type management packet; or
when a transport layer identifier of the RDMA packet is greater than a first value, the RDMA packet is the data packet.

20. A remote direct memory access-based communication method, wherein the method comprises:
determining a first packet, wherein the first packet is obtained based on a remote direct memory access RDMA packet; and
sending the first packet through a general packet radio service tunnelling protocol for user plane GTP-U tunnel, wherein when the RDMA packet is a first-type management packet, the GTP-U tunnel is a first GTP-U tunnel, and the first-type management packet is used for communication management; or when the RDMA packet is a data packet, the GTP-U tunnel is a second GTP-U tunnel.

21. A remote direct memory access-based communication method, wherein the method comprises:
receiving a first packet on a first radio bearer, wherein the first packet is obtained based on a remote direct memory access RDMA packet; and when the RDMA packet is a first-type management packet, the first radio bearer is a signaling radio bearer SRB, and the first-type management packet is used for communication management; or when the RDMA packet is a data packet, the first radio bearer is a computing radio bearer CRB or a data radio bearer DRB; and
sending the first packet through a general packet radio service tunnelling protocol for user plane GTP-U tunnel.

22. The method according to claim 21, wherein
when the RDMA packet is the first-type management packet, the GTP-U tunnel is a first GTP-U tunnel; or
when the RDMA packet is the data packet, the GTP-U tunnel is a second GTP-U tunnel.

23. The method according to claim 21 or 22, wherein
when a transport layer identifier of the RDMA packet is less than or equal to a first value, the RDMA packet is the first-type management packet; or
when a transport layer identifier of the RDMA packet is greater than a first value, the RDMA packet is the data packet.

24. A remote direct memory access-based communication method, wherein the method comprises:
receiving a first packet through a general packet radio service tunnelling protocol for user plane GTP-U tunnel, wherein the first packet is obtained based on a remote direct memory access RDMA packet; and when the RDMA packet is a first-type management packet, the GTP-U tunnel is a first GTP-U tunnel, and the first-type management packet is used for communication management; or when the RDMA packet is a data packet, the GTP-U tunnel is a second GTP-U tunnel.

25. The method according to any one of claims 18, 20, 22, or 24, wherein
a type of the first GTP-U tunnel is a first type, and a GTP-U tunnel of the first type is used for transmitting a first-type management packet of RDMA; or
a type of the second GTP-U tunnel is a second type, and a GTP-U tunnel of the second type is used for transmitting a data packet of RDMA.

26. The method according to any one of claims 18, 20, 22, or 24, wherein
an identifier of the first GTP-U tunnel corresponds to the first-type management packet, and the first GTP-U tunnel is used for transmitting a first-type management packet of RDMA; or
an identifier of the second GTP-U tunnel corresponds to the data packet, and the second GTP-U tunnel is used for transmitting a data packet of RDMA.

27. A communication apparatus, wherein the communication apparatus comprises a module configured to perform the method according to any one of claims 1 to 26.

28. A communication apparatus, wherein the communication apparatus comprises a processor, and the processor is configured to run a computer program or instructions, to cause the communication apparatus to perform the method according to any one of claims 1 to 26.

29. A computer-readable storage medium, wherein the computer-readable storage medium stores computer instructions or a program, and when the computer instructions or the program is run on a computer, the method according to any one of claims 1 to 26 is performed.

30. A computer program product, wherein the computer program product comprises computer instructions, and when a part or all of the computer instructions are run on a computer, the method according to any one of claims 1 to 26 is performed.
